# EUROPÄISCHE PATENTSCHRIFT

(11) **EP 3 066 830 B1**
(45) Veröffentlichungstag und Bekanntmachung des Hinweises auf die Patenterteilung: **19.02.2020**
(21) Anmeldenummer: 14796008.2
(22) Anmeldetag: 31.10.2014
(51) Int. Cl.: H04N 13/229, H04N 13/25, H04N 5/225, H04N 13/232, H04N 13/218

(54) **MULTIAPERTURVORRICHTUNG UND VERFAHREN ZUR ERFASSUNG EINES OBJEKTBEREICHS**
MULTIAPERTURE DEVICE AND METHOD FOR CAPTURING AN OBJECT AREA
DISPOSITIF ET PROCÉDÉ MULTIOUVERTURE POUR LA CAPTURE D'UNE REGION D'OBJET

(30) Priorität: 08.11.2013 DE 102013222780
(43) Veröffentlichungstag der Anmeldung: 14.09.2016
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); BRÜCKNER, Andreas, 07743 Jena (DE); BRÄUER, Andreas, 07646 Schlöben (DE)
(74) Vertreter: Schenk, Markus
(86) Internationale Anmeldenummer: PCT/EP2014/073457
(87) Internationale Veröffentlichungsnummer: WO 2015/067535

(56) Entgegenhaltungen:
- EP-A2- 2 177 869
- WO-A1-2013/108656
- DE-A1-102009 049 387
- US-A1- 2009 122 148
- US-A1- 2012 307 099
- US-A1- 2013 027 520

## Beschreibung

Die Erfindung bezieht sich auf eine Multiaperturvorrichtung und ein Verfahren zur Erfassung eines Objektbereichs.

Konventionelle Kameras beruhen auf dem Einzelaperturprinzip. Es wird hierbei ein durchgehendes Bild des Objekts aufgenommen, wobei benachbarte Bereiche im Objekt auch im Bild benachbart sind. Um eine Tiefeninformation aufzunehmen, werden in den meisten Fällen zwei Kameras benutzt, die einen lateralen Abstand voneinander aufweisen (Stereoskopie). Entsprechend des Abstands der Kameras (Basislänge) und der Objektentfernung betrachten die Kameras das Objekt aus unterschiedlichen Winkeln (Parallaxe). Folglich sind die Bilder der beiden Kameras in Abhängigkeit vom Objektabstand zueinander unterschiedlich stark lateral verschoben (Disparität). Aus der Kenntnis des Basisabstands der Kameras und der Disparität kann auf die Objektentfernung geschlossen werden. Die Vergrößerung der Basislänge führt vorteilhafterweise zu einer verbesserten Tiefenauflösung bzw. zur Möglichkeit der Unterscheidung von Tiefen in größeren Objektentfernungen. Die gewünschte Miniaturisierung des gesamten Kameraaufbaus steht dem allerdings entgegen. Des Weiteren ergibt sich in der praktischen Umsetzungen eine Begrenzung der Genauigkeit der Tiefeninformation durch die Platzierungsgenauigkeit der beiden Kameras zueinander (Präzision der Basislänge).

Alternativ hierzu existieren Arraykameras nach dem Prinzip der Superauflösung, wie sie beispielsweise unter der Bezeichnung Pelican Imaging Camera-Array (PiCam) in [1] beschrieben sind. Derartige Kameras können aus einer Vielzahl einzelner Abbildungskanäle (2x2, 3x3, 4x4, 5x5 usw.) bestehen, die jeweils ein Bild des gesamten Objekts generieren. Im Allgemeinen können derartige multikanalige Aufbauten in Anordnungen der Form NxN bzw. NxM mit N und M größer gleich 2 aufgebaut sein. Da die einzelnen Kameras des Arrays einen lateralen Abstand zueinander aufweisen, entsteht derselbe Parallaxeeffekt und Informationen über Objektabstände können mittels Bildverarbeitung gewonnen werden. Da die Arraykamera bspw. wegen Integration in mobile Geräte wie Mobiltelefone, Smartphone, Notebooks u. a. insgesamt klein sein soll, ist auch der Abstand der Einzelkanäle der Arraykamera klein und damit die Tiefenauflösung stark beschränkt. Ein Ziel des Multikanalaufbaus liegt in der Reduzierung der Bauhöhe der Kamera. Eine kleinere Bauhöhe kann bspw. durch Reduzierung der Brennweite f der Abbildungskanäle erfolgen.

Ein lichtempfindlicher Pixel der Breite dp einer Kamera empfängt Licht aus dem Winkelbereich a=arctan(dp/f), wobei der Winkelbereich a auch als Akzeptanzwinkel bezeichnet wird. Bei Verkleinerung der Brennweite f resultiert ein größerer Akzeptanzwinkel a. Die Vergrößerung des Akzeptanzwinkels a ist gleichbedeutend mit der Verringerung der Auflösung, da nur noch weniger Objektbereiche voneinander unterschieden werden können. Um bei Verringerung der Brennweite keinen Verlust an Auflösung zu erleiden, werden

Prinzipien der Superauflösung angewendet. Voraussetzung hierfür ist das Vorhandensein von Aliasing, d.h. die Optik generiert Punktbilder, die kleiner als der Pixelpitch, d. h. der Abstand zwischen zwei Pixeln, sind. Die Blickfelder der einzelnen Kameras sind dabei um Bruchteile eines Pixelpitches verschoben. Ist die Breite des Punktbilds um den Faktor N kleiner als der Pixelpitch, so sind die Blickfelder der Kameras um jeweils ein N-tel des einem Pixel zugordneten Winkels verschoben. Das bedeutet, dass die optischen Achsen der einzelnen Kameras jeweils um ein N-tel des Pixelpitches verschoben sind. Die Verschiebung kann dabei in X- und Y-Richtung durchgeführt werden, d.h. es können N² Kameras mit den jeweiligen Subpixelverschiebungen vorhanden sein. Aus den unterabgetasteten Teilbildern mit Subpixelversatz kann durch Nutzung von Bildverarbeitung in Software ein hochaufgelöstes Gesamtbild berechnet werden.

Als weitere Alternative existieren Clusteraugenkameras (siehe DE102009049387), wie sie beispielhaft in Fig. 9 und 10 erläutert sind. Clusteraugenkameras können ähnlich den Arraykameras aus einer Vielzahl von Einzelkanälen bestehen. Im Unterschied zu diesen übertragen die Kanäle des Arrays nicht das gesamte Objektfeld, sondern die einzelnen Kanäle betrachten jeweils lediglich Teilbereiche davon. Die Teilbilder der jeweiligen Objektteilbereiche werden wiederum mittels Bildnachverarbeitung zu einem Gesamtbild zusammengesetzt. Die laterale Anordnung der Abbildungskanäle mit einem jeweils zugeordneten Teilgesichtsfeldbereich auf einem Bildwandler ist dabei beliebig. Entgegen klassischer Einzelaperturkameras und auch Arraykameras, die als Arrayanordnungen konventioneller Einzelaperturkameras zu verstehen sind, sind in diesen Aufbauten Gesichtsfeld und laterale Position des Bildes auf dem elektronischen Bildwandler voneinander entkoppelt. Um die Bauhöhe zu reduzieren, werden wiederum kleine Brennweiten genutzt. Um hierbei keinen Verlust an Winkelauflösung zu erleiden, kommt das bereits beschriebene Verfahren der Superauflösung mit um Subpixel verschobenen Teilbildern zum Einsatz.

In einer gegenwärtigen Lösung sind die Abbildungskanäle derart angeordnet, dass lateral benachbarte Kanäle auch im Gesichtsfeldwinkel benachbart sind. Das hat zur Folge, dass aufgrund des kleinen Basisabstands der Kanäle nur eine geringe Parallaxe auftritt und mithin nur geringe Verschiebungen der Teilbilder zu beobachten sind, die mithin zu einer begrenzten Tiefenauflösung führen. Um die Verschiebung der Teilbilder auswerten zu können, sollten diese teilweise überlappend sein, d.h. in einzelnen Bereichen gleiche Bildinhalte aufweisen. Aus dem Vergleich der lateralen Position der Teilbereiche mit jeweils identischem Inhalt in den entsprechenden Abbildungskanälen kann bei Kenntnis der Basislänge auf den Abstand des Objekts zur Kamera geschlossen werden. Da dies für jeden Bildpunkt durchgeführt werden kann, kann eine Tiefenkarte des Objektraums erstellt werden.

In WO 2103/108656 A1 ist eine Festkörper-Bildaufnahmevorrichtung beschrieben, die einen Pixelarray-Abschnitt umfasst, der eine Vielzahl von Farbpixeln und eine Vielzahl von Hauptkomponentenpixeln für die Luminanz enthält, die in einem Array angeordnet sind, wobei die Farbpixel und die Hauptkomponentenpixel für die Luminanz jeweils eine photoelektrische Umwandlung aufweisen Funktion, bei der der Pixelarray-Abschnitt eine erste und eine zweite Pixelgruppe enthält, die jeweils mehrere Pixel enthalten, und die Hauptkomponentenpixel für die Luminanz der ersten Pixelgruppe zugeordnet sind und die Farbpixel der zweiten Pixelgruppe zugeordnet sind.

In DE 10 2009 049387 A1 ist eine Bildverarbeitungsvorrichtung und ein Verfahren zur optischen Abbildung beschrieben, welche beispielsweise in miniaturisierten Kamerasystemen für tragbare Endgeräte zum Einsatz kommen können.

Die Aufgabe der vorliegenden Erfindung besteht deshalb darin, eine Vorrichtung und ein Verfahren zu schaffen, die eine Erfassung eines Objektbereichs mit einer verbesserten Tiefeninformation ermöglichen.

Diese Aufgabe wird durch den Gegenstand der unabhängigen Patentansprüche gelöst.

Der Kerngedanke der vorliegenden Erfindung besteht darin, erkannt zu haben, dass obige Aufgabe dadurch gelöst werden kann, dass durch vorteilhafte Anordnung optischer Kanäle auf einem Bildwandler eine Disparität derart erhöht werden kann, das eine verbesserte Tiefenauflösung eines aufgenommenen Objektbereichs erreicht werden kann.

Gemäß einem Ausführungsbeispiel umfasst eine Multiaperturvorrichtung zumindest zwei optische Kanäle zur Erfassung eines ersten Teilbereichs eines Objektbereichs und zumindest zwei optische Kanäle zur Erfassung eines zweiten Teilbereichs des Objektbereichs. Die Teilbereiche des Objektbereichs überlappen sich teilweise. Die optischen Kanäle zur Erfassung des ersten und des zweiten Teilbereichs sind in einer Zeile und dabei verschränkt, d. h. alternierend angeordnet, so dass zwischen zwei optischen Kanälen zur Erfassung des ersten Teilbereichs ein optischer Kanal zur Erfassung des zweiten Teilbereichs angeordnet ist. Der erste Teilbereich und der zweite Teilbereich überlappen teilweise und sind in dem Objektbereich von einander verschieden sind. Jeder optische Kanal weist einen Bildsensorbereich aufweist, dessen Position auf einem Bildwandler von einer Position des zu erfassenden Teilbereichs innerhalb des Objektbereichs abhängig ist. Optische Zentren von Optiken der optischen Kanäle liegen auf einer Geraden entlang einzelner optischer Kanäle liegen und Mitten der Bildsensorbereiche der optischen Kanäle gegenüber einer äquidistanten Verteilung entlang der Geraden relativ zu der Linie variieren; oder jeder optische Kanal weist einen Bildsensorbereich auf, dessen Position auf einem Bildwandler von einer Position des zu erfassenden Teilbereichs innerhalb des Objektbereichs abhängig ist. Mitten der Bildsensorbereiche der optischen Kanäle liegen auf einer Geraden entlang einzelner optischer Kanäle und optische Zentren von Optiken der optischen Kanäle variieren gegenüber einer äquidistanten Verteilung entlang der Geraden relativ zu der Linie.

Vorteilhaft an dieser Ausführungsform ist, dass ein großer lateraler Abstand zwischen optischen Kanälen zur Erfassung eines Teilbereichs eine verbesserte Tiefenauflösung des Objektfeldes ermöglicht. Dies erlaubt eine Miniaturisierung von Bilderfassungsvorrichtungen und/oder eine Kompensation der bspw. durch eine reduzierte Brennweite induzierten Reduzierung der Tiefenauflösung.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1a: eine schematische Aufsicht auf eine Multiaperturvorrichtung mit einer Vielzahl von optischen Kanälen und Bildsensorbereichen in einer zeilenförmigen Struktur;
- Fig. 1b: eine schematische Darstellung einer zweidimensionalen Anordnung von optischen Kanälen auf einem Bildsensor zur Erfassung eines Objektbereichs, bei der die Anordnung der Bildsensorbereiche einer Position des Teilbereichs innerhalb des Objektbereichs entspricht;
- Fig. 1c: eine schematische Darstellung der Verteilung der von den einzelnen Kanälen abgetasteten Objektbereiche infolge der Verschiebung der optischen Kanäle bzgl. der Zentren ihrer zugeordneten Optiken, die einen im Wesentlichen gleichen Teilbereich des Objektbereichs erfassen, beispielhaft für optische Kanäle aus Figur 1a;
- Fig. 2a: eine schematische Aufsicht auf einen Ausschnitt bzw. den Abschnitt der Multiaperturvorrichtung aus Fig. 1a;
- Fig. 2b: eine schematische Aufsicht auf den Abschnitt aus Fig. 2a bei dem die optischen Kanäle einen lateralen Versatz senkrecht zu einer Zeilenrichtung aufweisen, so dass die Bildbereiche der einzelnen Abbildungskanäle in gleicher Position senkrecht zu der Zeilenrichtung angeordnet sind;
- Fig. 3a: eine schematische Aufsicht auf ein Substrat eines Bildsensors mit einer möglichen resultierenden Anordnung der Bildsensorbereiche gemäß Fig. 2a;
- Fig. 3b: eine schematische Anordnung der Bildsensorbereiche, wie sie aus einer Anordnung der optischen Kanäle gemäß Fig. 2b resultieren kann;
- Fig. 4a: eine schematische Aufsicht auf einen Ausschnitt einer Multiaperturvorrichtung in Form eines Abschnitts mit einer Anordnung der optischen Kanäle gemäß einem Kriterium des gleichmäßigen Aufbaus;
- Fig. 4b: schematische Aufsicht auf einen Abschnitt als Teil einer Multiaperturvorrichtung mit einer Sortierung der optischen Kanäle analog Fig. 4a, wobei die optischen Kanäle einen lateralen Versatz senkrecht zu einer Zeilenrichtung aufweisen, so dass die Bildbereiche der einzelnen Abbildungskanäle in gleicher Position senkrecht zu der Zeilenrichtung angeordnet sind;
- Fig. 5a: eine schematische Aufsicht auf einen Ausschnitt einer Multiaperturvorrichtung in Form eines Abschnitts mit einer alternativen Sortierreihenfolge der optischen Kanäle;
- Fig. 5b: schematische Aufsicht auf einen Abschnitt als Teil einer Multiaperturvorrichtung mit einer Sortierung der optischen Kanäle analog Fig. 5a, bei der die die optischen Kanäle einen lateralen Versatz senkrecht zu einer Zeilenrichtung aufweisen, so dass die Bildbereiche der einzelnen Abbildungskanäle in gleicher Position senkrecht zu der Zeilenrichtung angeordnet sind;
- Fig. 6a: eine schematische Aufsicht der Multiaperturvorrichtung mit vier entlang einer Zeilenstruktur nebeneinander angeordneten Abschnitten gemäß Fig. 2a, wobei sich die vier Abschnitte dahingehend voneinander unterscheiden, dass die Kanäle, die in etwa in dieselbe Blickrichtung ausgerichtet sind, zusätzlich eine Verschiebung zwischen der jeweiligen Optik und dem jeweiligen Teilbildbereich um einen halben Pixelpitch in X und/oder Y-Richtung aufweisen;
- Fig. 6b: eine schematische Aufsicht der Multiaperturvorrichtung mit vier entlang einer Zeilenstruktur nebeneinander angeordneten Abschnitten gemäß Fig. 2b;
- Fig. 6c: eine schematische Aufsicht der Multiaperturvorrichtung mit vier entlang einer Zeilenstruktur nebeneinander angeordneten Abschnitten gemäß Fig. wobei sich die vier Abschnitte dahingehend voneinander unterscheiden, dass die Kanäle, die in etwa in dieselbe Blickrichtung ausgerichtet sind, zusätzlich eine Verschiebung zwischen der jeweiligen Optik und dem jeweiligen Teilbildbereich um einen halben Pixelpitch in X und/oder Y-Richtung aufweisen;
- Fig. 6d: eine schematische Aufsicht der Multiaperturvorrichtung mit vier entlang einer Zeilenstruktur nebeneinander angeordneten Abschnitten gemäß Fig. 4b;
- Fig. 6e: eine schematische Aufsicht der Multiaperturvorrichtung mit vier entlang einer Zeilenstruktur nebeneinander angeordneten Abschnitten gemäß Fig. 5a, wobei sich die vier Abschnitte dahingehend voneinander unterscheiden, dass die Kanäle, die in etwa in dieselbe Blickrichtung ausgerichtet sind, zusätzlich eine Verschiebung zwischen der jeweiligen Optik und dem jeweiligen Teilbildbereich um einen halben Pixelpitch in X und/oder Y-Richtung aufweisen;;
- Fig. 6f: eine schematische Aufsicht der Multiaperturvorrichtung mit vier entlang einer Zeilenstruktur nebeneinander angeordneten Abschnitten gemäß Fig. 5b;
- Fig. 7: vier schematische Ansichten einer alternativen Anordnung der Abschnitte der Variante aus Fig. 6a wobei sich die vier Abschnitte dahingehend voneinander unterscheiden, dass die Kanäle, die in etwa in dieselbe Blickrichtung ausgerichtet sind, zusätzlich eine Verschiebung zwischen der jeweiligen Optik und dem jeweiligen Teilbildbereich um einen halben Pixelpitch in X und/oder Y-Richtung aufweisen;;
- Fig. 8a: eine schematische Ansicht einer Anordnung der Abbildungskanäle gemäß einer Sortierreihenfolge, wie sie in Fig. 1a dargestellt ist wobei sich die vier Abschnitte dahingehend voneinander unterscheiden, dass die Kanäle, die in etwa in dieselbe Blickrichtung ausgerichtet sind, zusätzlich eine Verschiebung zwischen der jeweiligen Optik und dem jeweiligen Teilbildbereich um einen halben Pixelpitch in X und/oder Y-Richtung aufweisen;;
- Fig. 8b: eine Anordnung von vier Abschnitten mit einer alternativen Sortierreihenfolge der optischen Kanäle;
- Fig. 8c: eine schematische Aufsicht auf eine Multiaperturvorrichtung, wie sie in Fig. 8b dargestellt ist, bei der die Abschnitte so angeordnet sind, dass eine Überschneidung von Kanten in einer X- und Y-Richtung zwischen den einzelnen Abschnitten verhindert ist;
- Fig. 8d: eine Multiaperturvorrichtung gemäß den Ausführungen in Fig. 8c, bei der die Abschnitte beabstandet zueinander angeordnet sind, wie es beispielsweise für eine Variante in Fig. 7 erläutert ist;
- Fig. 9: eine schematische Ansicht eines beispielhaften Multikanalabbildungssystems gemäß dem Stand der Technik;
- Fig. 10: eine schematische Darstellung einer Abtastung verschiedener Objektteilbereiche durch eine 2D-Clusteraugenkamera gemäß dem Stand der Technik.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

In nachfolgenden Ausführungen wird unter einer Multiaperturvorrichtung eine Vorrichtung zur optischen Erfassung eines Objektbereichs, wie etwa ein Bild, verstanden. Bei der Multiaperturvorrichtung kann es sich bspw. um eine Kamera handeln, die ausgebildet ist, ein Bild mit mehreren Pixeln zu erfassen. Der Multiaperturansatz erlaubt eine kompakte Bauweise der Vorrichtung. Ein Pixel kann bspw. durch einen Charged-Coupled Device (CCD) oder einen Complementary Metal Oxide Seminconductor (CMOS) Bildsensor erfasst werden. Der Bildsensor kann ein oder mehrere Bildsensorbereiche umfassen, die in einem oder mehreren Bildwandlerelementen angeordnet sein können. Ein optischer Kanal einer Multiaperturvorrichtung ist ausgebildet, um einen Teilbereich des Objektfeldes auf zumindest einen Pixel, d. h. Bildsensorbereich, des Bildwandlers abzubilden und kann ein optisches Element oder eine Abbildungsoptik, wie etwa eine Linse, einen Ausschnitt aus einer dezentrierten Linse oder eine Freiformfläche, mit einem optischen Zentrum aufweisen. Optional kann die Optik eine Blende aufweisen, um Streulicht abzuschirmen. Die Blende kann dabei zwischen einem zu erfassenden Objekt und/oder dem Bildwandler angeordnet sein. Der elektro-optische Sensor ist ausgebildet, um den Objektbereich bzw. eine aus dem Objektbereich empfangene elektromagnetische Strahlung zu erfassen. Die elektromagnetische Strahlung kann einen sichtbaren und/oder einen nicht sichtbaren Wellenlängenbereich aufweisen. So kann der Wellenlängenbereich beispielsweise auch der ultraviolette oder infrarote Bereich sein. Die Optik kann auch eine Kombination mehrerer Linsen, mehrerer Ausschnitte dezentrierter Linsen und/oder mehrerer Freiformflächen sein. Das optische Element eines optischen Kanals kann dabei bezüglich zumindest eines weiteren optischen Kanals so angeordnet sein, dass bspw. eine Abbildung des Teilbereichs auf zumindest zwei Bildsensorbereiche durch eine gemeinsame Linse möglich ist. Alternativ kann das optische Element lediglich bezüglich eines optischen Kanals angeordnet sein.

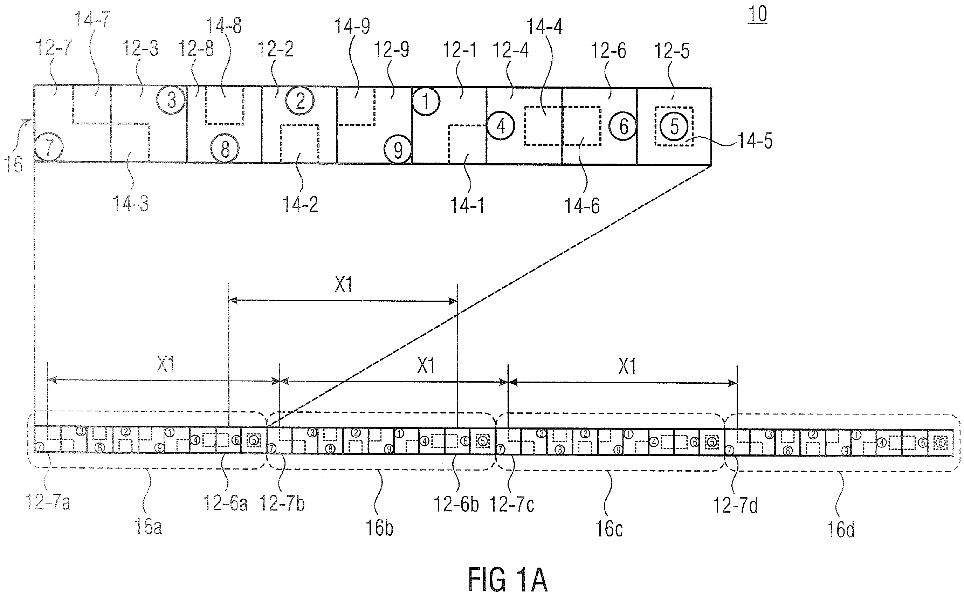

Fig. 1a zeigt eine schematische Aufsicht auf eine Multiaperturvorrichtung 10 mit einer Vielzahl von optischen Kanälen 12-1 bis 12-9, wie es durch die quadratischen durchgezogenen Linien angedeutet ist. Ein optischer Kanal ist ausgebildet, um jeweils einen Teilbereich des Objektbereichs zu erfassen und umfasst jeweils einen Bildsensorbereich 14-1 bis 14-9 auf einem Bildwandler, wie es durch die gestrichelten Linien innerhalb der optischen Kanäle angedeutet ist. Ein jeweiliger Bildsensorbereich 14-1 bis 14-9 eines optischen Kanals 12-1 bis 12-9 kann eine kleinere Fläche aufweisen als der eine Linse zur Fokussierung des von dem Teilbereich empfangenen Lichts oder Strahlung, weshalb eine Fläche des Bildsensorbereichs 14-1 bis 14-9 kleiner sein kann als eine Fläche des optischen Kanals 12-1 bis 12-9. Mehrere Teilbildwandler 14-1 bis 14-9 können auf einem gemeinsamen Substrat angeordnet sein (single chip). Wie es durch die verschiedenen Orientierungen der Bildsensorbereiche 14-1 bis 14-9 innerhalb der optischen Kanäle 12-1 bis 12-9 angedeutet ist, weisen die optischen Kanäle 12-1 bis 12-9 einen von einander verschiedenen Blickwinkel auf, d. h. die optischen Kanäle 12-1 bis 12-9 sind ausgebildet, einen von einander verschiedenen Teilbereich des Objektbereichs zu erfassen. Wie es ebenfalls durch die gestrichelten Quadrate und die Nummerierungen der optischen Kanäle angedeutet ist, sind die optischen Kanäle 12-1 bis 12-9 so angeordnet, dass sich benachbarte Teilbereiche des Objektbereichs, wie etwa und oder und, überlappen. Die Überlappung der Teilbereiche ermöglicht eine Auswertung der Anschlüsse, d.h. der in verschiedenen Teilbereichen gleichen Bildinhalte, um auf Tiefeninformationen schließen zu können und um die Bildinformationen aus den Teilbildern zu extrahieren und damit das Gesamtbild des Gesamtobjekts zusammenzustellen. Vereinfachend sind die Bildsensorbereiche 14-1 bis 14-9 mit einer Abmessung in X- und Y-Richtung von 50% der optischen Kanäle 12-1 bis 12-9 dargestellt. Alternativ können die Abmessungen der Bildsensorbereiche 14-1 bis 14-9 in X- und/oder Y-Richtung ein beliebiges Verhältnis zu Abmessungen der optischen Kanäle 12-1 bis 12-9 aufweisen. Positionen der Bildsensorbereiche können abhängig von einer Position der Mitte der optischen Zentren des optischen Elementes innerhalb der Grundfläche des jeweiligen optischen Kanals positioniert sein.

Alternativ ist ebenfalls vorstellbar, dass das Gesamtgesichtsfeld, d. h. der Objektbereich, in X- und Y-Richtung eine von drei verschiedene Anzahl von Teilbereichen aufweist. Ferner ist ebenfalls vorstellbar, dass der Objektbereich in X- und Y-Richtung in eine unterschiedliche Anzahl von Teilbereichen aufgeteilt ist, bspw. 5x3, 15x10 oder 1920x1028.

Eine Detailansicht eines Abschnitts 16a zeigt neun optischen Kanäle 12-1 bis 12-9, die jeweils einen Bildsensorbereich 14-1 bis 14-9 umfassen. Basierend auf der Blickrichtung des jeweiligen optischen Kanals ist der Bildsensorbereich 14-1 bis 14-9 innerhalb einer Grundfläche der optischen Kanäle 12-1 bis 12-9 verschoben, wie es durch die gestrichelten Linien angedeutet ist. Eine Nummerierung innerhalb der optischen Kanäle dient lediglich der Veranschaulichung der Anordnung der Teilbereiche und einer vereinfachten Unterscheidung der optischen Kanäle. Abhängig von der Orientierung, d. h. Blickrichtung des jeweiligen optischen Kanals 12-1 bis 12-9, wie es auch durch die Nummerierung 1 bis 9 angedeutet ist, sind die optischen Kanäle 12-1 bis 12-9 ausgebildet, neun Teilbereiche zu erfassen, Alternativ kann der Objektbereich auch 2, 3, mehr als 10, mehr als 1.000 oder mehr als 1.000.000 Teilbereiche aufweisen. Jeder Teilbereich wird mit einer Anzahl entsprechend der Anzahl der Abschnitte 16a-d, wie etwa im dargestellten Beispiel von vier, erfasst.

Die Multiaperturvorrichtung 10 weist beispielhaft vier Abschnitte 16a-d mit einer identischen Sortierreihenfolge der optischen Kanäle 12-1 bis 12-9 auf, die jeweils einen optischen Kanal 12-1 bis 12-9 zur Erfassung eines Teilbereichs aufweisen, so dass unter anderem die Anzahl der optischen Kanäle identisch ist. In anderen Worten weist jeder Teilbereich 16a-d je einen optischen Kanal 12-1 bis 12-9 auf, wobei die optischen Kanäle 12-1a bis 12-9 lateral benachbart in einer einzeiligen Struktur angeordnet sind. In anderen Worten umfasst Vorrichtung 10 eine Mehrzahl von Kameraarrays, den optischen Kanälen, bzw. Abschnitten 16a-d. Die vier Teilbereiche 16a-d sind jeweils lateral benachbart angeordnet, sodass die Gesamtzahl an optischen Kanälen ebenfalls lateral benachbart in einer Zeile nebeneinander angeordnet ist. Die Anordnung der optischen Kanäle 12-1 bis 12-9 ist einzeilig, was auch als eine Form 1xN beschrieben werden kann.

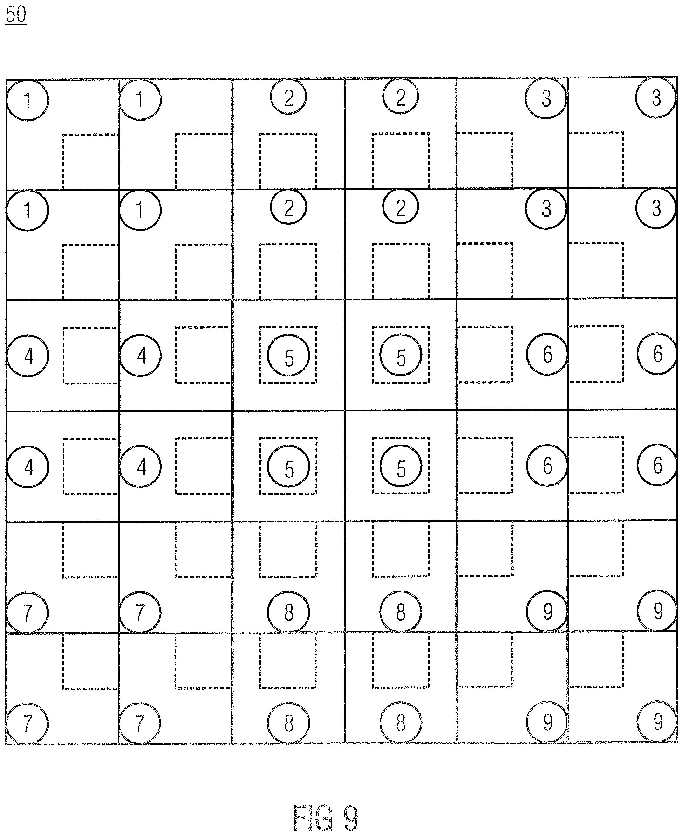

Die Anzahl der Abschnitte 16a-d kann aus einem zu erzielenden Superresolutionfaktor resultieren. Im dargestellten Bespiel beträgt dieser sowohl in einer X- als auch in einer Y-Richtung des Objektbereichs jeweils 2, wie es beispielsweise in Fig. 9 näher erläutert ist. Für die Erzielung der Auflösungserhöhung um den gewünschten Superresolutionfaktor können in X- und Y-Richtung entsprechend viele optische Kanäle ausgebildet werden, wobei die jeweiligen Kanäle 12-7a, 12-7b, 12-7c und 12-7d im Wesentlichen denselben Objektbereich betrachten. Die Bildsensorbereiche 14-1 können in den jeweiligen Teilbereichen, d. h. Abschnitten, 16a-d bezüglich ihren zugeordneten optischen Kanälen 12-7a-d jedoch um einen halben Pixel, d. h. mit einem Pixelpitch der der Hälfte einer Ausdehnung des Pixels in einer Richtung lateral zu einer Zeilenrichtung entspricht, in X- und/oder Y-Richtung vorschoben sein. So können sich beispielsweise die Bildsensorbereiche 14-1 der Abschnitte 16a und 16b bezüglich ihrer jeweilig zugeordneten Kanäle 12-7 in der X-Richtung und/oder der Y-Richtung um einen halben Pixel unterscheiden und in Y-Richtung nicht unterscheiden, der Bildsensorbereich 14-1 des Abschnitts 16c um einen halben Pixel in Y-Richtung und/oder in X-Richtung von dem Bildsensorbereich 14-1 des Abschnitts 16a und der Bildsensorbereich des 14-1 des Abschnitts 16d bspw. sowohl in X- als auch in Y-Richtung um einen halben Pixel gegenüber dem Bildsensorbereich 14-1 des Abschnitts 16a unterscheiden. Die Anzahl von Abschnitten 16 kann damit auch als Produkt der Superresolutionfaktoren in X- und Y-Richtung bezeichnet werden, wobei die Faktoren ganzzahlig unterschiedlich sein können.

Optische Kanäle 12-7a, 12-7b, 12-c und/oder 12-7d zur Erfassung eines im Wesentlichen gleichen Teilbereichs des Objektbereichs können einen beliebigen lateralen Versatz zueinander in einer Richtung senkrecht zu einer Zeilenrichtung bzw. senkrecht zu einer Richtung des Abstands X1 aufweisen. Wenn dieser Abstand einen Bruchteil, wie bspw. 1/4, 1/3 oder 1/2, eines Abstandes zwischen zwei Pixeln, d. h. Teilbildbereichen, (Subpixelpitch) beträgt, kann dieser Versatz auch als Subpixelversatz oder Subpixelpitch bezeichnet werden. Der Subpixelpitch kann bspw. auf dem Superresolutionsfaktor basieren. Wird bspw. ein Superresolutionsfaktor von 2 umgesetzt und ein Teilbereich des Objektbereichs in X- und Y-Richtung 2-fach erfasst, so kann der Subpixelpitch bspw. 1/2 der Pixelbreite entsprechen. Der Versatz kann bspw. dafür genutzt werden eine Auflösung des Objektbereichs in einen Subpixelbereich zu erhöhen. In anderen Worten ist es aufgrund der Verschränkung der optischen Kanäle möglich, dass die Abtastlücken eines optischen Kanals durch einen benachbarten optischen Kanal erfasst werden. Alternativ können die die optischen Kanäle zur Erfassung eines im Wesentlichen gleichen Teilbereichs 12-7a, 12-7b, 12-c und/oder 12-7d auch versatzfrei angeordnet sein.

Durch den auftretenden Blickwinkelversatz (Parallaxe) optischer Kanäle 12-7a, 12-7b, 12-c und/oder 12-7d auf denselben Objektpunkt, d. h. denselben Teilbereich kann eine Subpixelverschiebung in Bezug auf einen Bildsensorbereich erhalten werden, welche mittels eines Super Resolution Algorithmus aus der Vielzahl der niedrig aufgelösten Mikrobilder pro optischem Kanal 12-7a, 12-7b, 12-c und/oder 12-7d ein hoch aufgelöstes Gesamtbild errechnen kann. In anderen Worten können Mittelpunkte der Bildsensorbereiche 14-7 der optischen Kanäle 12-7a, 12-7b, 12-c und/oder 12-7d verschoben angeordnet sein, so dass zumindest zwei der optischen Kanäle 12-7a, 12-7b, 12-7c, und/oder 12-7d mit einem Pixelpitch oder einem Bruchteil eines Pixelpitches unterschiedliche, teilweise überlappende Erfassungsbereiche aufweisen. Ein Überlappbereich der Erfassungsbereiche zweier optischer Kanäle 12-7a, 12-7b, 12-7c, und/oder 12-7d kann so versetzt auf einen Bilderfassungssensor abgebildet werden.

Vorrichtung 10 kann als einen Superresolutionsfaktor von 2, d h. 2² = 4 Abschnitte 16a-d aufweisend, bezeichnet werden, das bedeutet, dass sowohl die X- als auch die Y-Richtung des Objektbereichs bzw. jeder Teilbereich des Objektbereichs vierfach erfasst wird. Durch die laterale Beabstandung der optischen Kanäle zur Erfassung eines Teilbereichs, wie bspw. 12-7a, 12-7b, 12-c und 12-7d, können diese optischen Kanäle eine Verschiebung innerhalb des erfassten Teilbereichs aufweisen, wobei die optischen Kanäle 12-7a, 12-7b, 12-7c und 12-7d ausgebildet sind, zumindest im Wesentlichen den selben Teilbereich erfassen. In anderen Worten wird jeder Teilbereich des Objektbereichs viermal erfasst, was einer doppelten Abtastung in der X-Richtung und einer doppelten Abtastung in der Y-Ausrichtung des Objektbereichs entsprechen kann.

Die identische Sortierreihenfolge der Teilbereiche 16a-d und mithin der optischen Kanäle, die einen zumindest annähernd gleichen Teilbereich des Objektfeldes erfassen, wie etwa der optischen Kanäle 12-7a, 12-7b, 12-7c und 12-7d ermöglicht einen größtmöglichen lateralen Abstand entlang einer Ausbildung der Zeilenstruktur. Wie es durch die Abstände der Bildsensorbereiche 14-1 bis 14-9 entlang der Ausbildung der Zeilenstruktur angedeutet ist, können zwischen den Bildsensorbereichen 14-1 bis 14-9 der optischen Kanäle 12-1 bis 12-9 optische Leerräume, d. h. Zwischenräume, ausgebildet sein. In diese Zwischenbereiche, d. h. in den Bereichen zwischen den Teilbildwandlern können beispielsweise nicht-lichtsensitive elektronische Komponenten, wie etwa Ausleseschaltkreise, Analog-Digital-Wandler (ADCs), Verstärker, etc. angeordnet sein.

Jeder optische Kanal eines Abschnitts 16a-d ist ausgebildet, um einen Teilbereich des Objektbereichs zu erfassen, wobei sich in dem Objektbereich benachbarte Teilbereiche teilweise überlappen. Die Anordnung der optischen Kanäle in den Abschnitten 16a-d ist verschränkt und regelmäßig, so dass ein Abstand X1 für optische Kanäle, die den gleichen oder im Wesentlichen gleichen bzw. selben Teilbereich erfassen, konstant ist, wie beispielsweise für die optischen Kanäle 12-7a bis 12-7d oder 12-6a und 12-6b.

Der Abstand X1 kann sowohl als Maximum als auch als äquidistanter Abstand bezeichnet werden, da er für jeden Teilbereich 16a-d und jeden optischen Kanal des jeweiligen Teilbereichs gilt.

Ferner können ein oder mehrere optische Kanäle ein Transmissionsfilter, wie etwa ein Farbfilter, umfassen, das ausgebildet ist, um einen oder mehrere Wellenlängenbereiche außerhalb des Transmissionsbereichs (Filterdurchlassbereich) zu filtern, d. h. zu reduzieren oder zu minimieren. Damit kann bspw. ein Teilbereich des Objektbereichs bezüglich zwei oder mehrerer verschiedener Wellenlängenbereichen erfasst werden. Ein Transmissionsfilter kann bspw. pixelweise, das heißt ein einem einzelnen optischen Kanal 12-1 bis 12-9, bspw. durch Anordnung in einem bekannten "Bayer-Mosaik" für einen optischen Kanal 12-7a, 12-7b, 12-7c oder 12-7d oder für zwei oder mehrere optischen Kanäle zur Erfassung eines Teilbereichs 12-7a, 12-7b, 12-7c und/oder12-7d angeordnet sein. Ein Transmissionsfilter kann bspw. innerhalb eines Mikrolinsenobjektives des jeweiligen optischen Kanals oder auf dem zugeordneten Bildsensorbereich, integriert werden. Ein derartiges Transmissionsfilter erlaubt die Zuordnung einer Spektralfarbe zu einem optischen Kanal 12-1 bis 12-9 bzw. 12-7a, 12-7b, 12-7c oder 12-7d.

In anderen Worten sind die Abbildungskanäle, die die annähernd gleichen und nur um einen Teil des Gesichtsfelds eines Pixels versetzten Objektbereiche übertragen in der streifenförmigen Anordnung voneinander maximal mit dem Abstand X1 entfernt. Hieraus kann eine große bis maximale Disparität erreicht werden und damit diesbezüglich eine verbesserte bis bestmögliche Tiefenauflösung.

In anderen Worten sind die optischen Kanäle mit nahezu identischer Blickrichtung und mithin nahezu identischen Bildinhalten, wie es in Fig. 1a durch eine gleiche Nummerierung angedeutet ist, mit möglichst großem lateralem Abstand angeordnet. Dies resultiert beispielsweise in der gezeigten linearen Anordnung. Um eine Tiefenkarte erstellen zu können, wird jeder Objektpunkt von mindestens zwei Kanälen, beispielsweise vier, abgebildet. Infolge des maximalen lateralen Abstands dieser Kanäle ist die vom Objektabstand abhängige Verschiebung der Teilbilder maximal, so dass eine optimale Tiefenauflösung erzielbar ist. Die Multiaperturvorrichtung 10 ist gegenüber dem Stand der Technik von einem Zusammenhang zwischen einer Bildposition auf dem Bildwandler und der Blickrichtung des jeweiligen optischen Kanals losgelöst, um eine bestmögliche Tiefenauflösung zu erzielen. Die Bildbereichssensoren können auf Wafer-Level gefertigt werden, was eine kostengünstige Umsetzung der Apparatur ermöglicht. Eine lineare Anordnung der Bildbereichssensoren ermöglicht eine Maximierung von Abständen zwischen Abbildungskanälen, die zumindest teilweise gleiche Bildinformationen enthalten. Hierdurch kann eine maximale Basisbreite und mithin eine optimale Tiefenauflösung bei einer in etwa gleich großen Chipfläche im Vergleich zu Matrixsensoren erreicht werden.

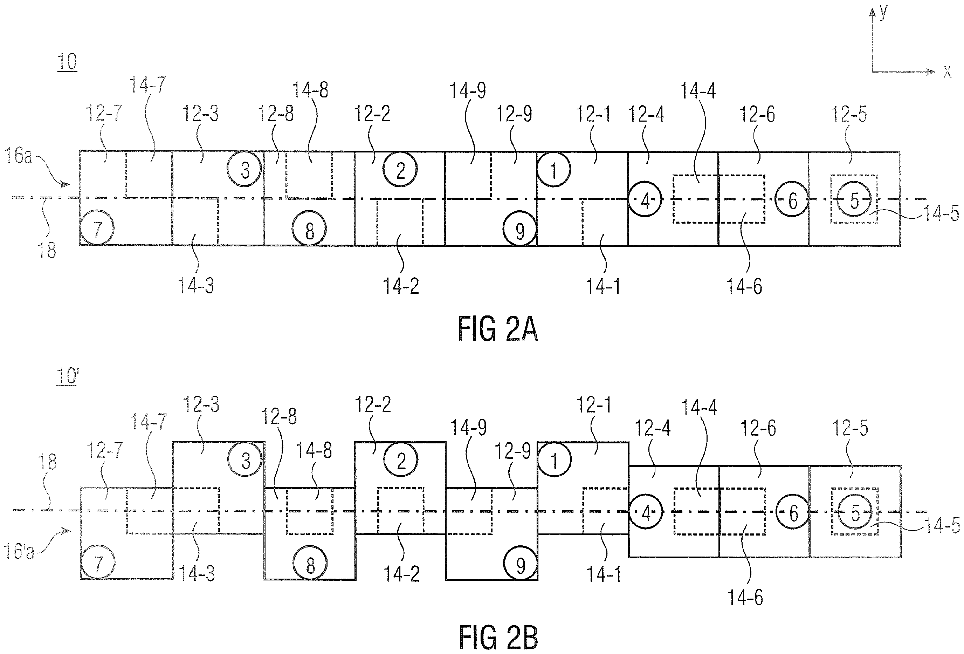

Eine Sortierung der optischen Kanäle 12-1 bis 12-9 innerhalb eines Zeilenabschnitts kann dabei beliebig oder nach verschiedenen Kriterien erfolgen, wie es beispielhaft in den Figuren 2, 4 und 5 erläutert ist.

Durch die von einander verschiedenen Blickrichtungen benachbarter optischer Kanäle 12-1 bis 12-9 kann jeder optische Kanal 12-1 bis 12-9 ein separates optisches Element aufweisen.

Alternative Ausführungsbeispiele zeigen Multiaperturvorrichtungen, die eine größere Anzahl von optischen Kanälen aufweisen. So können Multiaperturvorrichtungen einen Objektbereich mit einer Anzahl von mehr als 1.000, mehr als 100.000, mehr als 1.000.000 oder mehr als 10.000.000 Pixeln erfassen und mithin eine entsprechende Anzahl von optischen Kanälen aufweisen. Eine Anzahl von Abschnitten 16a-d in welchen die optischen Kanäle teilweise angeordnet sind, kann gemäß dem Superresolutionsprinzip ein Quadrat einer natürlichen Zahl, wie bspw. 2², 3² oder 4² sein. Alternativ ist ebenfalls vorstellbar, dass eine andere Anzahl von Abschnitten in der Multiaperturvorrichtung angeordnet ist, wie bspw. 2, 3, 5, 7 oder 11.

Mögliche Anwendungsformen der Vorrichtung können beispielsweise in der Gestenerkennung, 3D-Bildaufnahme, in Mensch-Maschinen-Schnittstellen, in Geräten oder Systemen mit einer Bilderfassung oder einer Kamera ermöglicht werden. Mögliche Geräte oder Systeme können beispielsweise mobile Geräte wie etwa Mobiltelefone, Smartphones, Laptops, Tablets, Spielekonsolen, automotive Anwendungen, Datenbrillen sein. Immobile Anwendungen können beispielsweise Kundenerkennungen an Maschinen oder Automaten sein.

In anderen Worten zeigt Fig. 1a ein kleinbauendes Abbildungssystem mit optimierter Gewinnung von Tiefeninformationen infolge einer größtmöglichen Basislänge. Die optischen Kanäle des Multiaperturaufbaus können dabei eine lineare Anordnung, das heißt zumindest abschnittsweise in einer Reihe, aufweisen.

Vorteilhaft an dieser Ausführungsform ist, dass das/die Multiapertursystem/Vorrichtung passiv arbeiten kann und auf eine Beleuchtung des Objektfeldes verzichtet werden kann. In anderen Worten kann das Objektfeld natürlich oder artifiziell, wie etwa durch ein Blitzlicht, beleuchtet sein, um den Objektbereich zu erfassen, so dass auf eine strukturierte Beleuchtung oder eine Laufzeitmessung zur Erstellung einer Tiefenkarte des Objektbereichs verzichtet werden kann.

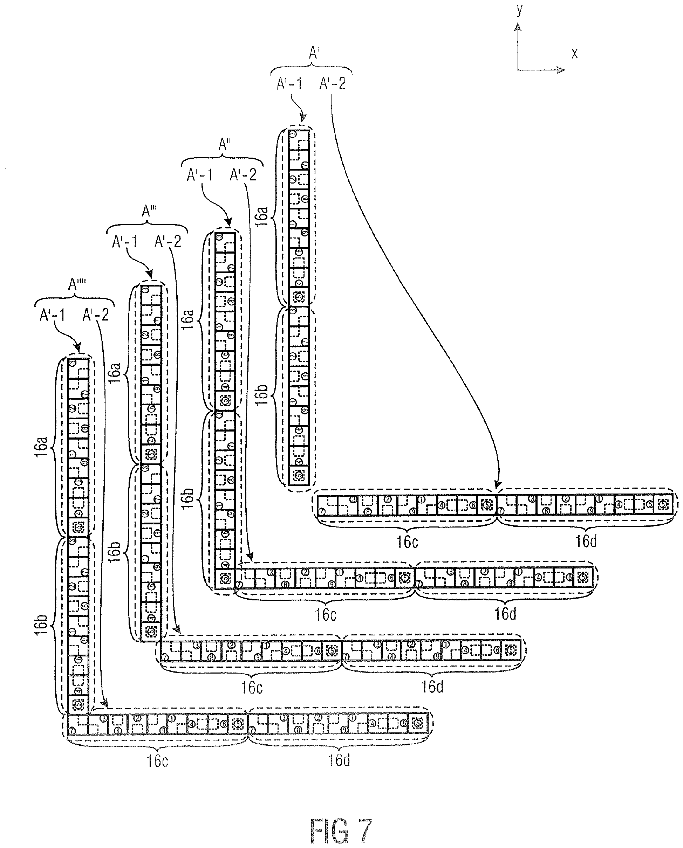

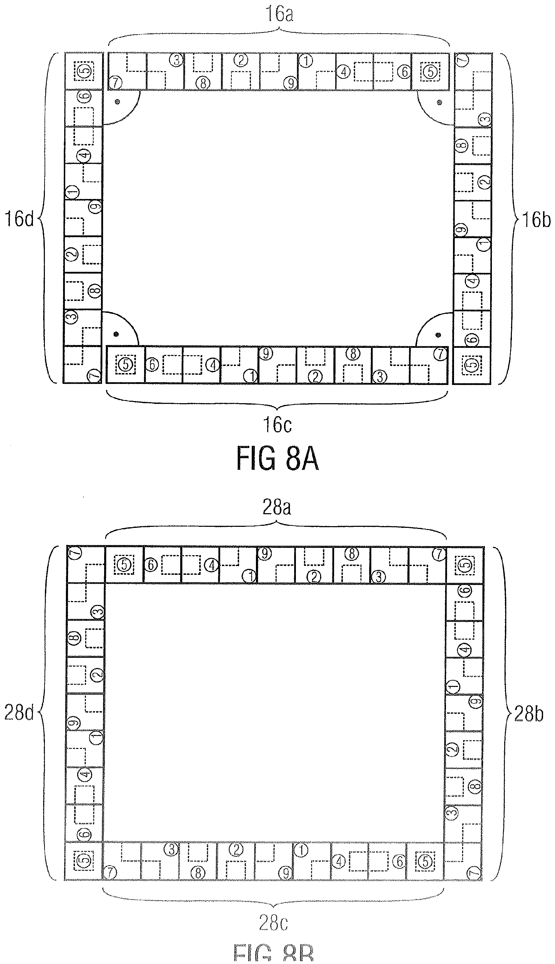

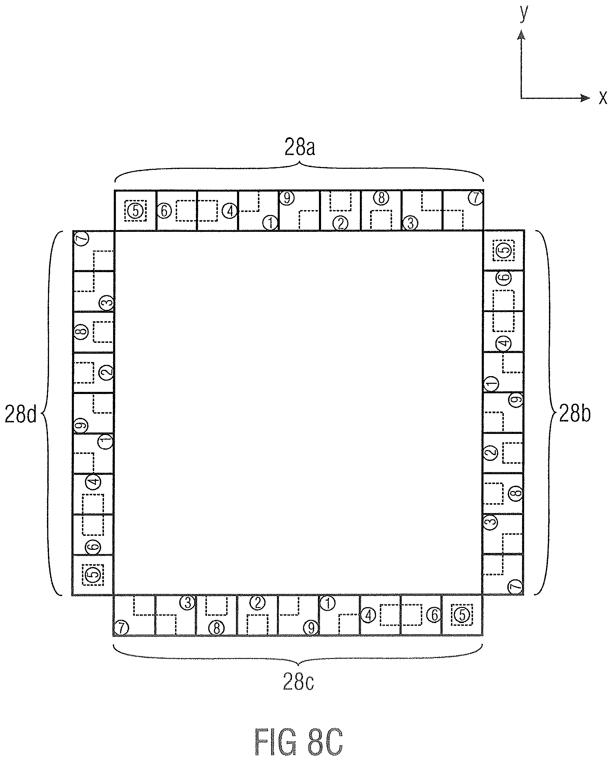

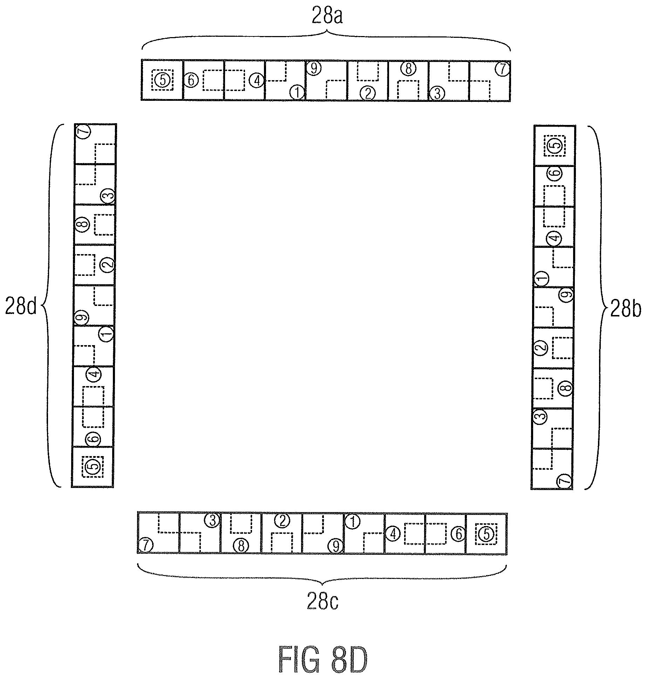

Die einzelnen Abschnitte der Multiaperturvorrichtung 10 können alternativ zu vorherigen Erläuterungen auch in einem Winkel zueinander und optional beabstandet zueinander angeordnet sein, wie es beispielhaft in den Figuren 7 und 8 gezeigt ist. Dies kann bspw. dann vorteilhaft sein, wenn eine laterale Abmessung entlang einer Zeilenstruktur in einem mobilen Gerät begrenzt ist.

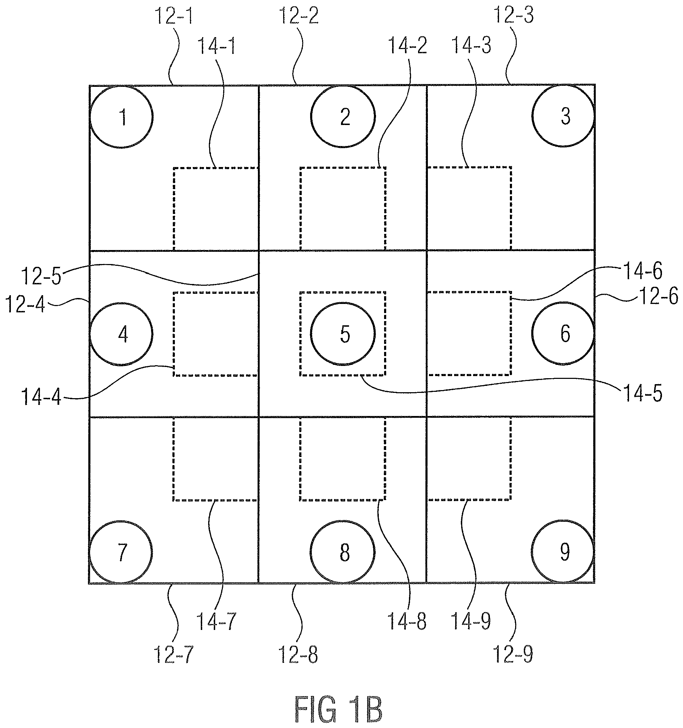

Fig. 1b zeigt eine schematische Darstellung einer zweidimensionalen Anordnung von optischen Kanälen 12-1 bis 12-9 auf einem Bildsensor zur Erfassung eines Objektbereichs, bei der die Anordnung der Bildsensorbereiche 14-1 bis 14-9 einer Position des Teilbereichs innerhalb des Objektbereichs entspricht. Eine derartige Anordnung ist beispielsweise in der DE 10 2009 049387 beschrieben. Jeder der optischen Kanäle 12-1 bis 12-9 ist ausgebildet, um einen anderen Teilbereich des Objektbereichs zu erfassen, wie es durch jeweils verschobene Bildsensorbereiche 14-1 bis 14-9 angedeutet ist. In anderen Worten weist jeder der optischen Kanäle 12-1 bis 12-9 eine unterschiedliche Blickrichtung auf den Objektbereich auf. Die Teilbereiche benachbarter optischer Kanäle, wie etwa 12-1 und 12-2 oder 12-5 und 12-6 oder 12-4 und 12-7 überlappen sich teilweise, das bedeutet, benachbarte optische Kanäle erfassen teilweise gleiche Bildinhalte, um so auf einen Objektabstand schließen zu können. Fig. 1b zeigt dabei lediglich eine Anordnung optischer Kanäle zur Verdeutlichung der Einflüsse unterschiedlicher Blickrichtungen optischer Kanäle. Wird der Objektbereich mit einer Aufteilung gemäß Fig. 1b und einem Superresolutionsfaktor von 2 jeweils in X- und Y-Richtung erfasst, können die optischen Kanäle ähnlich angeordnet sein, wie es in bspw. in Fig. 9 gezeigt ist. Die Figuren 1b und 9 entsprechen dem Stand der Technik und dienen der Verdeutlichung der Kanalaufteilung. Die optischen Kanäle 12-1 bis 12-9 weisen eine Sortierung auf, so dass optische Kanäle 12-7a, 12-7b, 12-7c und 12-7d die einem annähernd gleichen Objektbereichen zugeordnet sind, innerhalb der Reihe, d. h. Zeilenstruktur, maximal voneinander um den Abstand X1 getrennt sind.

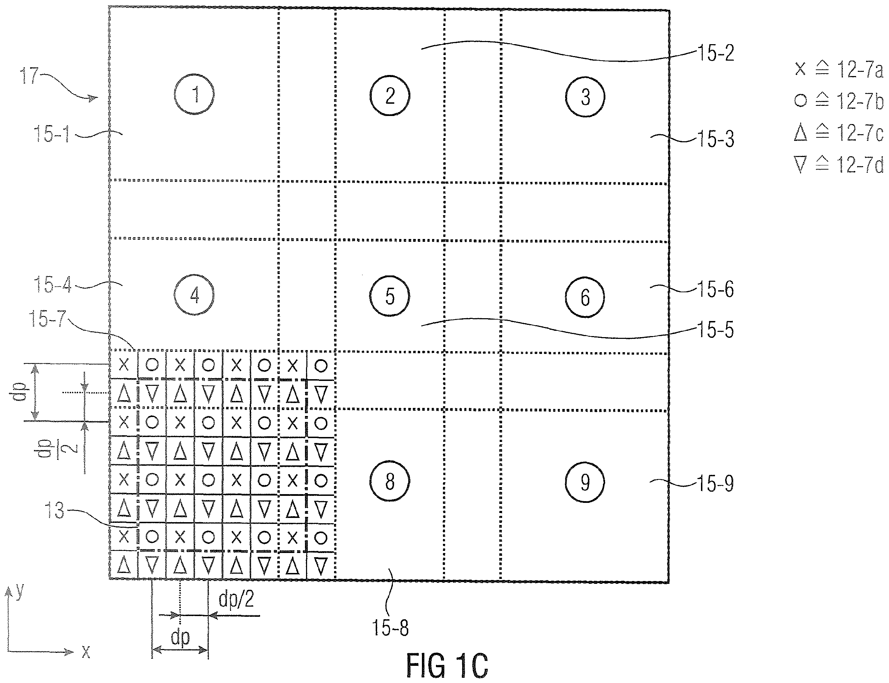

Fig. 1c zeigt eine schematische Darstellung der Verteilung der von den einzelnen Kanälen abgetasteten Objektbereiche infolge der Verschiebung der optischen Kanäle bzgl. der Zentren ihrer zugeordneten Optiken, die einen im Wesentlichen gleichen Teilbereich 15-7 der Teilbereiche 15-1 bis 15-9 des Objektbereichs 17 erfassen, beispielhaft für die optischen Kanäle 12-7a bis 12-7d aus Figur 1a. Die Teilbereiche 15-1 bis 15-9 sind so im Objektbereich 17 angeordnet, dass sich die Teilbereiche 15-1 bis 15-9 teilweise überlappen. Die Bildsensorbereiche der optischen Kanäle 12-7a bis 12-7d sind jeweils beispielhaft ausgebildet, um eine Anzahl von 4x4 Pixeln, das bedeutet 4 Pixeln in einer X-Richtung des Objektbereichs 17 und 4 Pixel in einer Y-Richtung des Objektbereichs 17 zu erfassen. Die 4x4 Pixel des optischen Kanals 12-7a sind durch das Symbol x, die 4x4 Pixel des optischen Kanals 12-7b durch das Symbol o, die 4x4 Pixel des optischen Kanals 12-7c durch das Symbol Δ und die 4x4 Pixel des optischen Kanals 12-7d durch ein um 180° im Uhrzeigersinn gedrehtes Symbol Δ, das im Folgenden als gedrehtes Δ bezeichnet wird.

Die optischen Kanäle 12-7a bis 12-7d sind ausgebildet, im Wesentlichen den gleichen Teilbereich 15-7 zu erfassen. Die einzelnen Pixel x, ○, Δ oder gedrehtes Δ weisen dabei zueinander, d. h. innerhalb des jeweiligen optischen Kanals, den Pixelpitch dp auf. Die optischen Kanäle 12-7a bis 12-7d sind zueinander um einen Bruchteil (dp/2) des Pixelpitches dp, d. h. um die Subpixelverschiebung oder um den Subpixelversatz lateral, d. h. in einer X- und/oder einer Y-Richtung, zueinander verschoben, so dass bspw. ein Pixel mit dem Symbol x zu einem benachbarten Pixel mit einem Symbol o oder Δ einen Abstand des Bruchteils dp/2 aufweist.

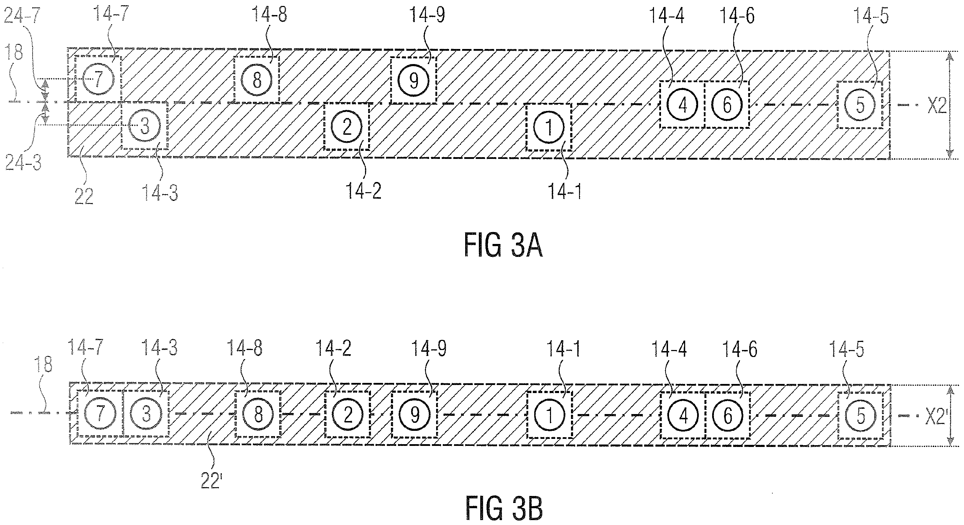

In anderen Worten können, bspw. wenn die optischen Kanäle 12-7a bis 12-7d einen ähnlichen oder identischen Aufbau aufweisen, die Mittelpunkte verschiedener Bildsensorbereiche der zugehörigen optischen Kanäle 12-7a bis 12-7d und/oder ihrer Abbildungsoptiken um den Bruchteil zueinander verschoben sein. Derart verschobene Erfassungsbereiche, d. h., Bereiche, die von einem optischen Kanal 12-7a, 12-7b, 12-7c oder 12-7d erfasst werden, weisen einen Überlappungsbereich 19 auf. Der Überlappbereich 19 kann versetzt auf einen Bildsensor abgebildet werden, wie es beispielhaft in den Figuren 3a und 3b erläutert ist.

Der Bruchteil kann dabei von einem umgesetzten Superresolutionsfaktor abhängig sein. Alternativ kann der Bruchteil, bzw. die Subpixelverschiebung ein anderer Bruchteil des Pixelpitches dp sein.

Alternativ zu obigen Ausführungen können ein oder mehrere der optischen Kanäle 12-7a bis 12-7d auch keine oder annähernd keine Verschiebung zueinander aufweisen, so dass der Bruchteil des Pixelpitches klein, wie etwa (1/10, 1/20 oder 1/200) oder gar zu null wird. In diesem Fall liegen zwei oder mehr der Symbole x, ○, Δ oder gedrehtes Δ übereinander. In Ausführungsbeispielen kann dies bspw. vorteilhaft sein, wenn verschiedene optische Kanäle unterschiedliche Transmissionsfilter aufweisen und bspw. verschiedene Farben des jeweiligen Teilbereichs 15-7 erfassen.

Fig. 2a zeigt eine schematische Aufsicht auf einen Ausschnitt, bzw. den Abschnitt 16 der Multiaperturvorrichtung 10 mit der Sortierung der optischen Kanäle 12-1 bis 12-9, wie sie in der Fig. 1a gezeigt ist. Zwei benachbarte optische Kanäle, wie 12-7 und 12-3, 12-8 und 12-2, 12-9 und 12-1, oder 12-4 und 12-6 können bezüglich der jeweiligen Position des Bildsensorbereichs des optischen Kanals einen maximalen Winkelabstand aufweisen, beispielsweise 180° für die optischen Kanäle 12-7 und 12-3. In anderen Worten sind die Blickrichtungen zweier benachbarter optischer Kanäle um bis zu 180° gedreht oder gespiegelt. Benachbarte optische Kanäle wie beispielsweise 12-3 und 12-8 oder 12-2 und 12-9 weisen einen Winkelabstand zwischen 90° und 180° zueinander und mithin einen gegenüber einer Anordnung, wie sie bspw. in Fig. 9 dargestellt ist, vergrößerten Winkelabstand auf.

In anderen Worten sind benachbarte optische Kanäle 12-1 bis 12-9 des Abschnitts 16a so angeordnet, dass sie eine maximale Differenz in ihrer Blickrichtung aufweisen können.

Die optischen Kanäle 12-1 bis 12-9 können, wie es in der Fig. 2a dargestellt ist, so angeordnet sein, dass Mittelpunkte der jeweiligen optischen Kanäle 12-1 bis 12-9, d. h. die optischen Mittelpunkte, entlang oder auf einer Geraden 18 angeordnet sind. Das bedeutet, dass Abstände der Mittelpunkte der Bildsensorbereiche 14-1 bis 14-9 bezüglich der Linie 18 variieren können. In anderen Worten sind die Mittelpunkte der optischen Kanäle 12-1 bis 12-9 kollinear.

Fig. 2b zeigt eine schematische Aufsicht auf einen Abschnitt 16'a einer Multiaperturvorrichtung 10'. Die Sortierreihenfolge der optischen Kanäle entlang der Linie 18 ist identisch zu der Sortierreihenfolge der Fig. 2a. Im Gegensatz zur Fig. 2a sind die optischen Kanäle 12-1 bis 12-9 entlang der linearen Anordnung der Zeilenstruktur in X-Richtung versetzt, so dass Mittelpunkte bzw. Mitten der Bildsensorbereiche kollinear an der Linie 18 angeordnet sind.

Alternativ können sowohl die Mitten der optischen Kanäle 12-1 bis 12-9 als auch die Bildsensorbereiche 14-1 bis 14-9 teilweise oder vollständig beabstandet von der Linie 18 angeordnet sein. Die Mittelpunkte bzw. Mitten können im Falle von quadratischen Querschnitten der optischen Kanäle 12-1 bis 12-9 bzw. der Bildsensorbereiche 14-1 bis 14-9 anhand des Schnittpunktes der Verbindungslinien zweier diagonaler Linien, die je zwei gegenüberliegende Eckpunkte des Quadrates verbinden ermittelt werden. Alternativ oder bei alternativ geformten optischen Kanälen 12-1 bis 13-9 oder Bildsensorbereichen 14-1 bis 14-9 können die Mitten bspw. anhand des geometrischen Flächenschwerpunktes oder Mittelpunktes ermittelbar sein. Alternativ kann auch eine Längsmittellinie eines optischen Kanals 12-1 bis 12-9 oder Bildsensorbereichs 14-1 bis 14-9 für eine Beschreibung der kollinearen oder beabstandeten von der Linie 18 Anordnung verwendet werden.

Bezüglich eines Bildwandlerbereichs, also einer Bildwandler- oder Sensorfläche kann eine Anordnung der optischen Kanäle 12-1 bis 12-9, wie sie in Fig. 2b angedeutet ist, vorteilhaft sein, da eine benötigte Sensorfläche, wie etwa eines CCD- oder CMOS-Sensors reduzierbar ist, wie es in Fig. 3 verdeutlicht wird.

In anderen Worten sind in Fig. 2b die optischen Kanäle in gleicher Reihenfolge angeordnet wie in Fig. 2a, jedoch in Y-Richtung, d.h. lateral zur Zeilenrichtung, derart verschoben, so dass die Mittelpunkte der Teilimager, d.h. der Bildsensorbereiche 14-1 bis 14-9 auf der Linie 18 liegen und eine Einhüllende der aktiven Teilimagerfläche mithin eine minimale Ausdehnung in Y-Richtung aufweisen kann. Hierdurch kann eine geringste Höhe, das heißt ein minimaler Flächenbedarf des streifenförmigen Bildsensors erreicht werden.

Die Fig. 2a und 2b zeigen lediglich eine Teilansicht der Gesamtvorrichtung 10 bzw. 10'. Insgesamt besteht eine Zeile, eventuell abhängig von einem Superresolutionsfaktor aus mehreren, beispielsweise vier Zellen, d. h. Abschnitten, 16 bzw. 16', die bspw. hintereinander oder in einem Winkel zueinander angeordnet sein können. Die Teilimager, d.h. Bildsensorbereiche 14-1 bis 14-9 sind in einer X/Y-Richtung des Objektbereichs um eine Breite eines jeweiligen Pixels dividiert durch den Superresolutionsfaktor, wie etwa dp/2, verschoben.

Fig. 3a zeigt eine schematische Aufsicht auf ein Substrat 22 eines Bildsensors mit einer möglichen resultierenden Anordnung der Bildsensorbereiche 14-1 bis 14-9 auf dem Substrat 22. Die Anordnung kann bspw. durch eine Anordnung der optischen Kanäle 12-1 bis 12-9 gemäß Fig. 2a resultieren. In anderen Worten sind die Bildsensorbereiche 14-1 bis 14-9 identisch zu Fig. 2a angeordnet. Die optischen Kanäle 12-1 bis 12-9 sind lediglich durch die Bildsensorbereiche 14-1 bis 14-9 dargestellt, um einen resultierenden Flächenbedarf des Substrats 22 zu verdeutlichen.

Durch den variierenden Abstand der Bildsensorbereiche 14-1 bis 14-9 von der Linie 18 resultiert in Abhängigkeit des minimalen und/oder maximalen Abstands eine Breite X2 des Substrats 22. Die Abhängigkeit der Ausdehnung der Breite X2 von den Abständen der Mittelpunkte der Bildsensorbereiche 14-1 bis 14-9 ist exemplarisch anhand der Abstände 24-3 des Bildsensorbereichs 14-3 von der Mittellinie 18 sowie anhand des Abstands 24-7 von dem Mittelpunkt des Bildsensorbereichs 14-7 von der Mittellinie 18 dargestellt. Eine Vergrößerung des Abstandes 24-3 oder des Abstandes 24-7 kann zu einer Vergrößerung der Breite X2 führen. Die Bildsensorbereiche 14-4, 14-5 und 14-6 weisen einen Abstand der Mittelpunkte der Bildsensorbereiche 14-4, 14-5 und 14-6 zu der Mittellinie 18 von nahezu null auf, so dass die jeweiligen Maximalwerte der Abstände der restlichen Bildsensorbereiche die Breite X2 beeinflussen.

In anderen Worten liegen die Mitten der Teilimager in Fig. 3a möglicherweise nicht auf einer Linie.

Fig. 3b zeigt die Anordnung der Bildsensorbereiche 14-1 bis 14-9, wie sie aus einer Anordnung der optischen Kanäle gemäß Fig. 2b resultieren kann. Eine Anordnung der Mittelpunkte der Bildsensorbereiche 14-1 bis 14-9 entlang der Linie 18, kann in einer Breite X2' eines Substrats 22' resultieren, die gegenüber der Breite X2 in Fig. 3a verringert sein ist. Dies kann zu einer verringerten Oberfläche des Substrats 22' gegenüber der Oberfläche des Substrats 22 in Fig. 3a und mithin zu einer kleineren Sensoroberfläche des Bildwandlers führen.

Durch eine Anordnung der Mittelpunkte der Bildsensorbereiche 14-1 bis 14-9 kann eine Reduzierung oder Minimierung des Flächenbedarfs des Substrats 22 bzw. 22' erreicht werden, was zu Materialeinsparungen und mithin einer Kosten- und/oder Bauraumreduzierung führen kann. Ein hoher Füllfaktor des Bildsensors kann bspw. durch ein Verhältnis der Gesamtfläche aller auf dem Bildsensor angeordneten Pixel durch die Gesamtfläche des Bildsensors beschrieben werden.

In anderen Worten liegen die Mitten der Teilimager auf einer Linie, so dass eine einhüllende, das heißt eine Außenkante des Substrats 22', mit einer geringen, bzw. minimalen Ausdehnung X2 senkrecht zu der Linie 18 in Y-Richtung resultiert. Hieraus ergibt sich ein geringerer Flächenbedarf des Substrats 22', auf dem die Teilimager, d. h. Bildsensorbereich 14-1 bis 14-9, angeordnet sind, und damit ein optimaler Füllfaktor, das heißt eine Flächeneffizienz des Substrats.

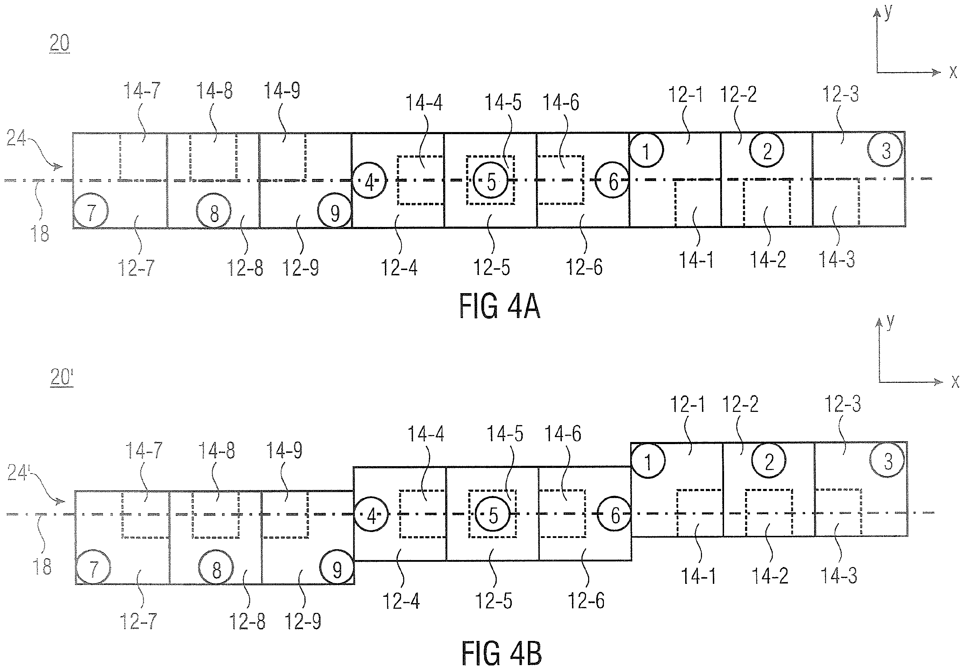

Fig. 4a zeigt eine schematische Aufsicht auf einen Ausschnitt einer Multiaperturvorrichtung 20 in Form eines Abschnitts 24 mit einer Anordnung der optischen Kanäle 12-1 bis 12-9 und den Bildsensorbereichen 14-1 bis 14-9 gemäß einem Kriterium des gleichmäßigen Aufbaus. Unter Berücksichtigung der Anordnung der optischen Kanäle 12-1 bis 12-9, wie sie in Fig. 1b erläutert ist, weisen die Bildsensorbereiche 14-1 bis 14-9 einer Zeile des Gesichtsfeldes der Fig. 1b, das heißt die Bildsensorbereiche 14-1 bis 14-3, 14-4 bis 14-6 und 14-7 bis 14-9 jeweils eine gleiche Y-Komponente des Abstandes der Mittelpunkte der jeweiligen Bildsensorbereiche 14-1 bis 14-3, 14-4 bis 14-6 und 14-7 bis 14-9 zu der Linie 18 auf. In anderen Worten ist die Y-Komponente einer Zeile des Gesichtsfeldes aus Fig. 1b und mithin des Gesichtsfeldwinkels, d. h. der Orientierung des jeweiligen optischen Kanals im Objektfeld, gleich.

Eine benachbarte Anordnung von in dem Gesichtsfeld bzw. dem Objektfeld benachbarten optischen Kanälen 12-1 bis 12-3, 12-4 bis 12-6 und 12-7 bis 12-9 kann beispielsweise bei einer Verschaltung der optischen Kanäle 12-1 bis 12-9 bzw. der Bildsensorbereiche 14-1 bis 14-9 auf dem Bildsensor zu einem vereinfachten Schaltungslayout führen. In anderen Worten können benachbarte optische Kanäle 12-1 bis 12-9 der Zeile einen gleichen Blickwinkel in Y-Richtung aufweisen.

Fig. 4b zeigt schematische Aufsicht auf einen Abschnitt 24' als Teil einer Multiaperturvorrichtung 20' mit einer Sortierung der optischen Kanäle 12-1 bis 12-9 analog Fig. 4a, wobei die optischen Kanäle in Y-Richtung derart angeordnet sind, dass die Mittelpunkte der Bildsensorbereiche 14-1 bis 14-9 auf der Linie 18 liegen und ein Substrat, auf welchem die Bildsensorbereiche 14-1 bis 14-9 angeordnet sind, einen gegenüber der Figuren 2a und 4a reduzierten oder minimierten Flächenbedarf aufweisen kann. In anderen Worten zeigt Fig. 4b einen gleichmäßigen Aufbau oder Sortierreihenfolge der optischen Kanäle 12-1 bis 12-9, das heißt die Y-Komponenten des Gesichtsfeldwinkels benachbarter optischer Kanäle 12-1 bis 12-9 sind gleich. Zusätzlich können die Pixelmatrizen in einer Zeile so angeordnet sein, dass ein geringster Flächenbedarf des Bildsensorsubstrates resultiert. Die optischen Kanäle 12-1 bis 12-9 sind gegenüber Fig. 4a in Y-Richtung derart verschoben, dass die Mittelpunkte der Teilimager, das heißt der Bildsensorbereiche 14-1 bis 14-9, auf der Linie 18 liegen und die Einhüllende der Teilimager mithin eine minimale Ausdehnung in Y-Richtung aufweist.

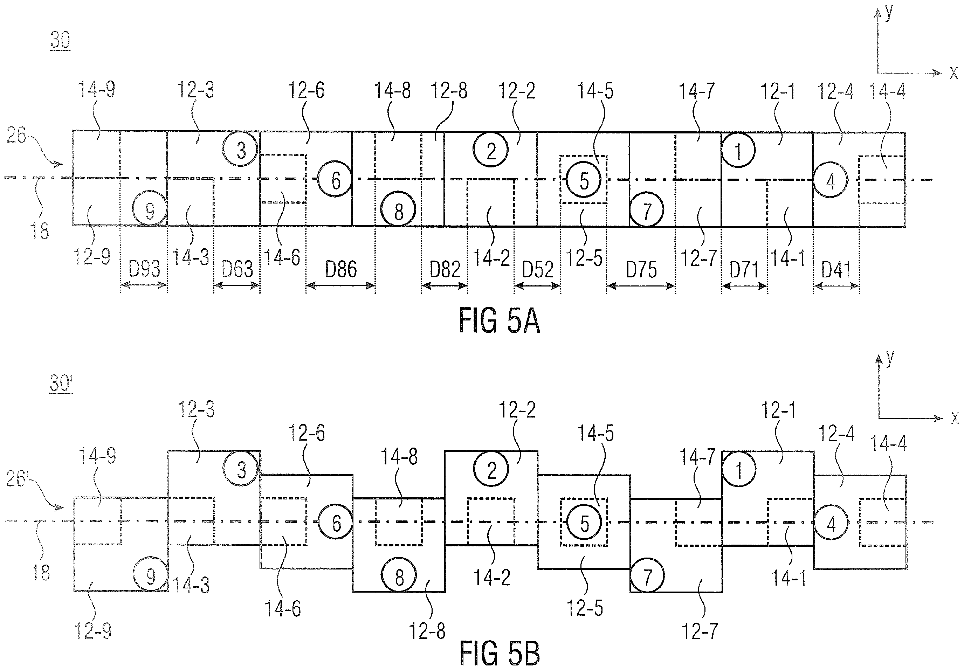

Fig. 5a zeigt eine schematische Aufsicht auf einen Ausschnitt einer Multiaperturvorrichtung 30 in Form eines Abschnitts 26 mit einer alternativen Sortierreihenfolge der optischen Kanäle 12-1 bis 12-9. Die optischen Kanäle 12-1 bis 12-9 sind derart angeordnet, dass die Bildsensorbereiche 14-1 bis 14-9 global betrachtet maximale Abstände D93, D63, D86, D82, D52, D75, D71 und D41 zueinander aufweisen, das heißt eine Totzone zwischen den optischen Kanälen 12-1 bis 12-9 vergrößert oder maximiert ist. Das bedeutet, dass Räume zwischen den Bildsensorbereichen 14-1 bis 14-9 so verteilt sind, dass eine optimale Raumausnutzung zwischen den Bildsensorbereichen 14-1 bis 14-9 derart möglich ist, dass Übersprechstrukturen zwischen den Bildsensorbereichen 14-1 bis 14-9 eine maximale Breite, das heißt eine maximale Ausdehnung entlang der Linie 18 aufweisen können. Ausführungsbeispiele zeigen Übersprechstrukturen, die zwischen zwei Bildsensorbereichen 14-1 bis 14-9 jeweils eine gleiche Breite aufweisen, so dass eine maximale mögliche gleiche Breite beispielsweise von einem minimalen Abstand zwischen zwei Bildsensorbereichen 14-1 bis 14-9 beeinflusst sein kann. Wie es beispielsweise in Fig. 2a bei den Bildsensorbereichen 14-4 und 14-6 gezeigt ist, können andere Optimierungskriterien, wie beispielsweise ein maximaler Winkelabstand, zu einem reduzierten oder minimierten Abstand zwischen zwei Bildsensorbereichen 14-1 bis 14-9 bis hin zu einem Abstand von nahezu null führen.

Andere Ausführungsbeispiele, wie sie beispielsweise in Fig. 4a erläutert sind, weisen minimale Abstände zwischen den Bildsensorbereichen 14-1 bis 14-9, wie etwa 14-1 und 14-2 in Fig. 4a, auf, die beispielsweise lediglich ein Viertel einer Abmessung der optischen Kanäle 12-1 bis 12-9 entlang der Linie 18 in X-Richtung entsprechen.

Die Abstände D93, D63, D86, D82, D52, D75, D71 und D41 können dahingegen eine große Breite gegenüber der Abmessung der optischen Kanäle 12-1 bis 12-9 in X-Richtung aufweisen und einige Hundert Mikrometer, wie etwa mehr als 200 µm, mehr als 400 µm oder mehr als 700 µm, bis zu einigen Millimetern, wie etwa mehr als 2 mm, mehr als 5 mm oder mehr als 7 mm betragen. Eine Übersprechstruktur kann beispielsweise Licht absorbierendes, teilweise transparentes oder opakes Material umfassen und kann ausgebildet sein, um ein Übersprechen, das heißt einen Übertritt von Licht oder elektromagnetischer Strahlung aus einem optischen Kanal 12-1 bis 12-9 zu einem anderen optischen Kanal 12-1 bis 12-9, zu reduzieren oder zu verhindern. Eine maximale Breite der Übersprechstrukturen kann zu einer maximalen Unterdrückung von Falschlicht-Übersprechen zwischen den optischen Kanälen 12-1 bis 12-9 führen. Ein global maximierter Abstand der Bildsensorbereiche 14-1 bis 14-9 kann zu einer gleichmäßigen Verteilung der Zwischenräume zwischen den Bildsensorbereichen über die Substratoberfläche führen. Diese gleichmäßigen Abstände können bspw. bei der Integration der nicht-lichtsensitiven elektronischen Komponenten in die Zwischenräume vorteilhaft sein, da für jeden optischen Kanal ein gleichmäßiger Bauraum verfügbar sein kann.

In anderen Worten weisen die Teilimager benachbarter Kanäle der Zeile einen maximalen lateralen Abstand in der Bildebene auf.

Fig. 5b zeigt schematische Aufsicht auf einen Abschnitt 26' als Teil einer Multiaperturvorrichtung 30' mit optischen Kanäle 12-1 bis 12-9 in der Sortierreihenfolge gemäß Fig. 5a, bei der die Mittelpunkte der Bildsensorbereiche 14-1 bis 14-9 entlang der Linie 18 angeordnet sind.

In anderen Worten zeigt Fig. 5b die Sortierreihenfolge aus Fig. 5a, bei der die optischen Kanäle 12-1 bis 12-9 in Y-Richtung derart verschoben sind, dass die Mittelpunkte der Teilimager auf einer Linie 18 liegen und die Einhüllende der Teilimager mithin minimale Ausdehnung in Y-Richtung aufweist.

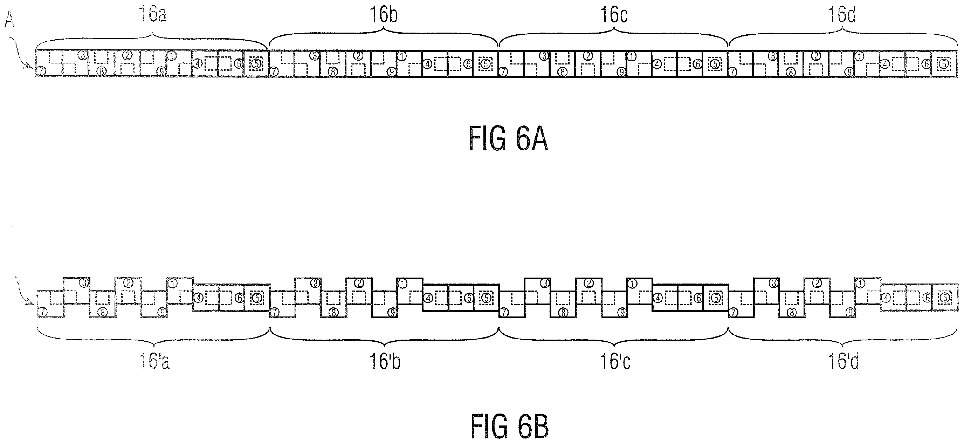

Die Figuren 6a-f zeigen eine schematische Aufsicht von optischen Multiaperturvorrichtungen mit einem Superresolutionsfaktor von 2 jeweils in X- und Y-Richtung, das bedeutet, einer Anzahl von vier nebeneinander angeordneten optischen Zeilen. In anderen Worten zeigen die Fig. 6a-f Gesamtansichten der zuvor erläuterten und in Ausschnitten dargestellten Multiaperturvorrichtungen 10, 10', 20, 20', 30 und 30'.

Fig. 6a zeigt eine schematische Aufsicht der Multiaperturvorrichtung 10 mit vier entlang einer Zeilenstruktur nebeneinander angeordneten Abschnitten 16a-d. Multiaperturvorrichtung 10 kann auch als Variante A bezeichnet werden. Optische Kanäle der vier Abschnitte 16a-d, die in etwa in dieselbe Blickrichtung ausgerichtet sind, können zusätzlich eine Verschiebung zwischen der jeweiligen Optik und dem jeweiligen Teilbildbereich um einen Bruchteil, wie etwa einen halben, Pixelpitch in X und/oder Y-Richtung aufweisen.

Fig. 6b zeigt eine schematische Aufsicht der Multiaperturvorrichtung 10' mit vier entlang einer Zeilenstruktur nebeneinander angeordneten Abschnitten 16'a-d. Multiaperturvorrichtung 10' kann auch als Variante B bezeichnet werden.

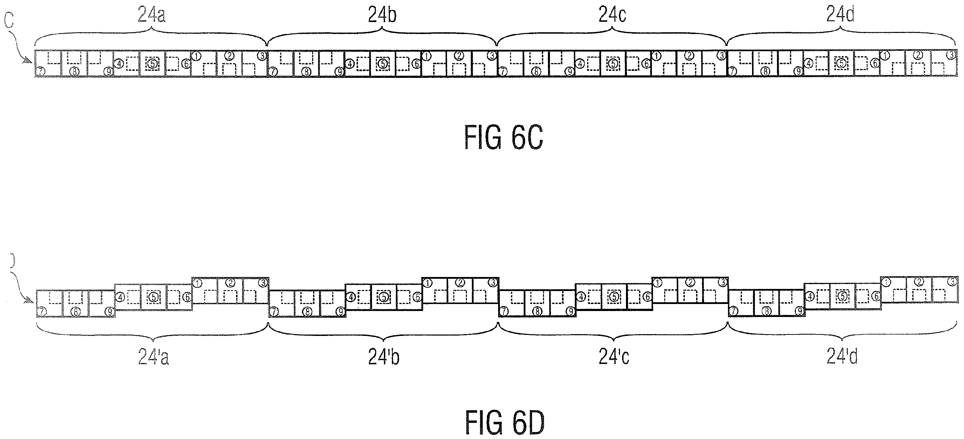

Fig. 6c zeigt eine schematische Aufsicht der Multiaperturvorrichtung 20 mit vier entlang einer Zeilenstruktur nebeneinander angeordneten Abschnitten 24a-d. Multiaperturvorrichtung 20 kann auch als Variante C bezeichnet werden. Optische Kanäle der vier Abschnitte 16a-d, die in etwa in dieselbe Blickrichtung ausgerichtet sind, können zusätzlich eine Verschiebung zwischen der jeweiligen Optik und dem jeweiligen Teilbildbereich um einen Bruchteil, wie etwa einen halben, Pixelpitch in X und/oder Y-Richtung aufweisen.

Fig. 6d zeigt eine schematische Aufsicht der Multiaperturvorrichtung 20' mit vier entlang einer Zeilenstruktur nebeneinander angeordneten Abschnitten 24'a-d. Multiaperturvorrichtung 20' kann auch als Variante D bezeichnet werden.

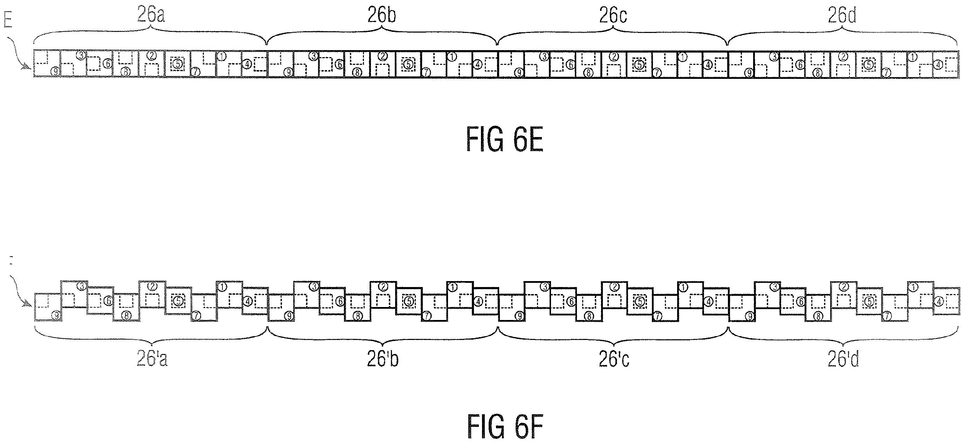

Fig. 6e zeigt eine schematische Aufsicht der Multiaperturvorrichtung 30 mit vier entlang einer Zeilenstruktur nebeneinander angeordneten Abschnitten 26a-d. Multiaperturvorrichtung 30 kann auch als Variante E bezeichnet werden. Optische Kanäle der vier Abschnitte 16a-d, die in etwa in dieselbe Blickrichtung ausgerichtet sind, können zusätzlich eine Verschiebung zwischen der jeweiligen Optik und dem jeweiligen Teilbildbereich um einen Bruchteil, wie etwa einen halben, Pixelpitch in X und/oder Y-Richtung aufweisen.

Fig. 6f zeigt eine schematische Aufsicht der Multiaperturvorrichtung 30' mit vier entlang einer Zeilenstruktur nebeneinander angeordneten Abschnitten 26'a-d. Multiaperturvorrichtung 30' kann auch als Variante F bezeichnet werden.

Die Figuren 6a-f zeigen im Gegensatz zu den Figuren 2, 4 und 5 jeweils eine komplette Ansicht der Zeilen mit optischen Vorrichtungen 10, 10', 20, 20', 30 bzw. 30' für einen Superresolutionsfaktor 2 in jeweils X- und Y-Richtung, welcher gemäß 2² = 4 nahezu gleichartige Elemente ermöglichen kann.

Fig. 7 zeigt vier schematische Ansichten einer alternativen Anordnung der Abschnitte 16a-d der Variante A aus Fig. 6a. Eine modifizierte Variante A', A", A''' bzw. A'''' umfasst jeweils zwei Abschnitte bzw. Teilbereiche A'-1 und A'-2. Die Teilbereiche A'-1 und A'-2 umfassen jeweils zwei Abschnitte 16a und 16b bzw. 16c und 16d, wie sie in Fig. 1a dargestellt sind. Die beiden Teilbereiche A'-1 und A'-2 sind in der Variante A' senkrecht und beabstandet zueinander angeordnet. In einer Variante A" sind die beiden Teilbereiche A'-1 und A'-2 senkrecht zueinander und direkt benachbart zueinander angeordnet, so dass der Abschnitt 16c und mithin der Teilbereich A'-2 in einer X-Richtung an dem Teilbereich A'-1 angeordnet ist.

In einer Variante A''' sind die Teilbereiche A'-1 und A'-2 direkt benachbart zueinander angeordnet, so dass ein Abstand zwischen den Abschnitten 16b und 16c minimal ist und eine Ausdehnung der Variante A''' in einer X-Richtung und einer Y-Richtung gleich ist.

Variante A"" zeigt eine Anordnung der beiden Teilbereiche A'-1 und A'-2 analog Variante A", bei der der Teilbereich A'-2 in einer Y-Richtung benachbart zu dem Teilbereich A'-1 angeordnet ist.

Optische Kanäle der vier Abschnitte 16a-d, die in etwa in dieselbe Blickrichtung ausgerichtet sind, können zusätzlich eine Verschiebung zwischen der jeweiligen Optik und dem jeweiligen Teilbildbereich um einen Bruchteil, wie etwa einen halben, Pixelpitch in X und/oder Y-Richtung aufweisen.

In anderen Worten zeigt Fig. 7 eine komplette Ansicht der Anordnung mit einer Umsortierung der Abbildungskanäle aus Fig. 2 in zwei senkrecht zueinander angeordneten Teilzeilen, wie sie für einen Superresolutionsfaktor 2 in jeweils X- und Y-Richtung resultieren kann, das heißt vier Abbildungskanälen pro Blickrichtung. Die Anordnung besteht aus zwei von wiederum zwei hintereinander angeordneten nahezu identischen Teilbereichen, d. h. Abschnitten, wobei die Teilimager gleicher Blickrichtung, das heißt gleiche Nummerierung, in den vier Teilbereichen der Zeile in X/Y um die Breite eines Pixels dividiert durch den jeweiligen Superresolutionsfaktor in X- bzw. Y-Richtung verschoben sind. Die vier Varianten A' bis A"" zeigen je eine Anordnung, die sich bezüglich der Anordnung zweier senkrecht zueinander stehenden Halbzeilen unterscheiden.

Prinzipiell kann eine Gesamtzeile beliebig viele Abschnitte umfassen, wie es in den Figuren 6a-6f angedeutet ist. Eine solche Gesamtzeile kann in Teilzeilen unterteilt werden, die möglicherweise identisch zueinander aufgebaut sind. Die Teilzeilen können in einem beliebigen Winkel, wie etwa 45°, 60°, 90° oder 180° zueinander angeordnet sein.

Fig. 8a zeigt eine schematische Ansicht einer Anordnung der Abbildungskanäle gemäß einer Sortierreihenfolge, wie sie in Fig. 1a dargestellt ist. Basierend auf einem Superresolutionsfaktor von 2 kann die Vorrichtung eine Anzahl von vier Abschnitten 16a-d aufweisen, welche bspw. in einem rechten Winkel direkt benachbart zueinander angeordnet sind.

Fig. 8b zeigt eine Anordnung von vier Abschnitten 28a-d. Eine Sortierreihenfolge der optischen Kanäle eines Abschnitts 28a-d kann einer gespiegelten Sortierreihenfolge des Abschnitts 16 entsprechen. Vorteilhaft an dieser Ausführungsform ist, dass die Sortierreihenfolge unter Beibehaltung des gewünschten Sortiereffektes, wie beispielsweise ein maximaler Winkelabstand zwischen den einzelnen Bildsensorbereichen angepasst werden kann, beispielsweise aufgrund einer optimierten Positionierung der nichtlichtempfindlichen Komponenten oder einer Verdrahtung des Substrates oder einer Platine, die ausgebildet ist, um die jeweiligen Bildbereichssensoren zu kontaktieren.

Fig. 8c zeigt eine schematische Aufsicht auf eine Multiaperturvorrichtung, wie sie in Fig. 8b dargestellt ist, bei der die Abschnitte 16a-d so angeordnet sind, dass eine Überschneidung von Kanten in einer X- und Y-Richtung zwischen den einzelnen Abschnitten 28a-d verhindert ist, wie es beispielsweise für die Variante A''' in Fig. 7 beschrieben ist. Eine derartige Anordnung ermöglicht eine Multiaperturvorrichtung mit optischen Kanälen, die in X- und Y-Richtung eine betragsmäßig gleiche Abmessung aufweisen kann.

Fig. 8d zeigt eine Multiaperturvorrichtung gemäß den Ausführungen in Fig. 8c, bei der die Abschnitte 28a-d beabstandet zueinander angeordnet sind, wie es beispielsweise für Variante A' in Fig. 7 erläutert ist.

Optische Kanäle der vier Abschnitte 16a-d oder 28a-d, die in etwa in dieselbe Blickrichtung ausgerichtet sind, können zusätzlich eine Verschiebung zwischen der jeweiligen Optik und dem jeweiligen Teilbildbereich um einen Bruchteil, wie etwa einen halben, Pixelpitch in X und/oder Y-Richtung aufweisen.

In anderen Worten zeigen die Figuren 8a-d eine Umsortierung der Abbildungskanäle aus Fig. 7 in vier senkrecht zueinander angeordneten Zeilen, d. h. Abschnitte, für einen Superresolutionsfaktor von 2 in jeweils X- und Y-Richtung, das heißt vier Abbildungskanälen pro Blickrichtung. Die Figuren 8a-d zeigen jeweils eine komplette Ansicht der beispielhaften Anordnung. Die jeweilige Anordnung besteht aus vier im rechten Winkel zueinander angeordneten nahezu identischen Teilbereichen, wobei die Teilimager gleicher Blickrichtung, das heißt Bildsensorbereiche gleicher Nummerierung, in den vier Teilbereichen bzw. Teilzeilen der gesamten Zeile in X/Y-Richtung um die Breite eines Pixels dividiert durch den jeweiligen Superresolutionsfaktor in X- bzw. Y-Richtung verschoben sein können. Die Figuren 8a-d zeigen vier Varianten, die sich in der Anordnung der je vier senkrechten Teilzeilen unterscheiden.

Die Teilzeilen können einen von 90° verschiedenen Winkel und/oder eine von vier verschiedene Anzahl aufweisen. So kann bspw. anstelle eines Vierecks, wie es beispielhaft in Fig. 8 gezeigt ist, eine Dreieckstruktur, eine Fünfeckstruktur oder ein anderes Polygon erhalten werden. Auch ist vorstellbar, dass die Zeile oder Teilzeile eine Krümmung entlang der Zeilenorientierung aufweist, sodass die optischen Kanäle bspw. die Form eines Ellipse oder eines Kreises einnehmen. Werden die Teilzeilen bspw. im oder entgegen dem Uhrzeigersinn aneinander durchlaufen, kann eine Reihenfolge der optischen Kanäle wie etwa gemäß den Figuren 6a-f erhalten werden.

Fig. 9 zeigt eine schematische Ansicht eines beispielhaften Multikanalabbildungssystems gemäß dem Stand der Technik. Das Multikanalabbildungssystem besteht aus optischen Kanälen, die in unterschiedliche Blickrichtungen basierend auf einem Superresolutionsfaktor von 2 jeweils in X- und Y-Richtung angeordnet sind. Das Objektfeld, wie es in Fig. 1b dargestellt ist, kann mit Vorrichtung 50 vierfach erfasst werden, d. h. jeder Teilbereich wird vierfach erfasst. Optische Kanäle, die eine gleiche oder teilweise gleiche Blickrichtung aufweisen, wie es durch eine identische Nummerierung 1 bis 9 dargestellt ist, sind benachbart zueinander angeordnet, wobei im Blickwinkel benachbarte Abbildungskanäle auch lateral benachbart zueinander angeordnet sind. Das heißt, dass beispielsweise die optischen Kanäle mit der Blickrichtung benachbart zueinander angeordnet sind. Die unterschiedlichen Blickrichtungen werden unter anderem durch den lateralen Versatz der Mittelpunkte der Teilbildmatrizen, d. h. Bildsensorbereiche, wie sie durch die gestrichelten kleinen Flächen angedeutet sind, generiert. Um eine Verkürzung der Bauhöhe der Abbildungskanäle zu erzielen, wird das Verfahren der Superauflösung angewandt. Vorrichtung 50 weist einen Superresolutionsfaktor in X- und Y-Richtung von je N = 2 auf, so dass die optischen Kanäle nahezu gleichen Bildinhalts, das heißt mit einer gleichen Nummerierung 1 bis 9, und mit nahezu gleicher Blickrichtung in X- und Y-Richtung um den Betrag einer Pixelbreite dividiert durch den Superresolutionsfaktor, das heißt 2, verschoben sind und mithin vier Kanäle pro Blickrichtung erforderlich sein können.

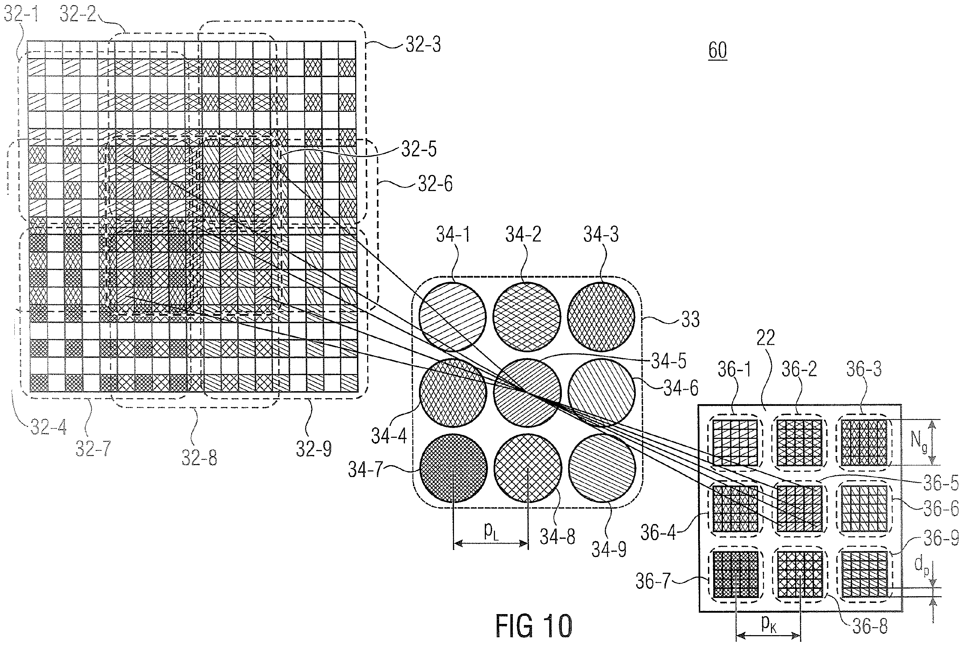

Fig. 10 zeigt eine schematische Darstellung einer Abtastung verschiedener Objektteilbereiche 32-1 bis 32-9 durch eine 2D-Clusteraugenkamera gemäß dem Stand der Technik. Bildpunkte in den verschiedenen Objektteilbereichen 32-1 bis 32-9 sind jeweils in einem Cluster benachbart zueinander angeordnet, wie es durch die verschiedenen Graustufen angedeutet ist. In andere Worten stellen die Teilbereiche 32-1 bis 32-9 das Objekt mit einer Zuordnung des Objektbereichs zu einzelnen optischen Kanälen über das Mikrolinsenarray 33 dar. Die verschiedenen Objektteilbereiche 32-1 bis 32-9 sind ineinander verschränkt, wie es durch die verschiedenen Graustufen der abgetasteten Punkte angedeutet ist. Ein Mikrolinsenarray 33 weist Segmentierungen 34-1 bis 34-9 auf, wobei jeweils die abgetasteten Bereiche 32-1 bis 32-9 der Objektebene einem Segment 34-1 bis 34-9 zugeordnet sind. Benachbarte Mittelpunkte der Segmente 34-1 bis 36-9 weisen einen Abstand von p_{L} auf, der von einer lateralen Ausdehnung der Teilbereiche 32-1 bis 32-9 und/oder einer Abstand d_{P} der Teilbereichssensoren auf dem Substrat 22 abhängig sein kann. sind in einem Abstand Das Substrat 22 weist Bereiche 36-1 bis 36-9 des Imagers auf, um Teilbilder zu erstellen. Jeder Teilbereich 36-1 bis 36-9 weist eine Anzahl N_{g} von Teilbereichssensoren auf, die jeweils einem Segment 32-1 bis 32-9 der Objektebene zuordenbar sind. Benachbarte Teilbereiche 36-1 bis 36-9 weisen einen lateralen Abstand der Mittelpunkte von p_{K} auf, der von einer lateralen Ausdehnung des Objektbereichs bzw. einer optischen Eigenschaft, wie etwa eine Brennweite, der Segmente 34-1 bis 34-9 des Mikrolinsenarrays 33 beeinflusst sein kann.

Zwischen dem Objektbereich und einem der N_{g} Teilbereichssensoren, die einem Segment 34-1 bis 34-9 des Mikrolinsenarrays 33 zugeordnet sind, kann sich ein optischer Kanal ausbilden. Die durch benachbarte optische Kanäle erfassten Objektteilbereiche 32-1 bis 32-9 überlappen sich jeweils um etwa eine halbe Größe des jeweiligen Abtastbereichs, wobei die Pixelgitter benachbarter Kanäle um die halbe Teilbildgröße und zusätzlich um einen Bruchteil des Pixelabstandes, das heißt 1/2 dp, gegeneinander versetzt sind. Somit kann die Umgebung jedes Objektpunktes im Allgemeinen durch jeweils vier optische Kanäle erfasst werden. Ein optischer Kanal kann, wie es bspw. in DE102009049387 beschrieben ist, jeweils eine beliebige Zahl, wie etwa 5x5 Pixel übertragen. In andere Worten zeigt Fig. 10 3x3 optische Kanäle mit je 5x5 Pixeln.

Eine lineare Anordnung in einer Zeilenstruktur ermöglicht, dass optische Kanäle jeweils nur Teilbereiche des gesamten Objektfeldes übertragen, das heißt erfassen, und jeder Objektbereich, der empfängerseitig der Größe eines Pixels eines Bildwandlers, wie etwa eines elektro-optischen Bildwandlers, zugeordnet ist, von zumindest zwei optischen Kanälen erfasst wird.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur:

[1] Kartik Venkataraman, Dan Lelescu, Jacques Duparre, Andre McMahon, Gabriel Molina, Priyam Chatterjee, Robert Mullis - Pelican Imagin Corporation; Shree Nayar - Columbia University: PiCam: An Ultra-Thin High Performanca Monolitic Camera Array; http://www.pelicanimaging.com/technology/PiCam_sa13.pdf (06.11.2013)

## Patentansprüche

1. Multiaperturvorrichtung (10; 10'; 20; 20'; 30; 30') zur Erfassung eines Objektbereichs (17) mit folgenden Merkmalen:
zumindest zwei optischen Kanälen (12-1 - 12-9) zur Erfassung eines ersten Teilbereichs (15-1 - 15-9) des Objektbereichs (17); und
zumindest zwei optischen Kanälen (12-1 - 12-9) zur Erfassung eines zweiten Teilbereichs (15-1 - 15-9) des Objektbereichs (17); wobei
die optischen Kanäle (12-1 - 12-9) zur Erfassung des ersten Teilbereichs (15-1 - 15-9) und des zweiten Teilbereichs (15-1 - 15-9) in einer einzeiligen Struktur verschränkt angeordnet sind; und wobei
sich der erste Teilbereich (15-1 - 15-9) und der zweite Teilbereich (15-1 - 15-9) teilweise überlappen und in dem Objektbereich von einander verschieden sind;
wobei jeder optische Kanal (12-1 - 12-9) einen Bildsensorbereich (14-1 - 14-9) aufweist, dessen Position auf einem Bildwandler von einer Position des zu erfassenden Teilbereichs innerhalb des Objektbereichs abhängig ist und wobei optische Zentren von Optiken der optischen Kanäle (12-1 - 12-9) auf einer Geraden (18) entlang einzelner optischer Kanäle (12-1 - 12-9) liegen und Mitten der Bildsensorbereiche (14-1 - 14-9) der optischen Kanäle (12-1 - 12-9) gegenüber einer äquidistanten Verteilung entlang der Geraden (18) relativ zu der Geraden (18) variieren; oder
wobei jeder optische Kanal (12-1 - 12-9) einen Bildsensorbereich (14-1 - 14-9) aufweist, dessen Position auf einem Bildwandler von einer Position des zu erfassenden Teilbereichs innerhalb des Objektbereichs abhängig ist und wobei Mitten der Bildsensorbereiche (14-1 - 14-9) der optischen Kanäle (12-1 - 12-9) auf einer Geraden (18) entlang einzelner optischer Kanäle (12-1 - 12-9) liegen und optische Zentren von Optiken der optischen Kanäle (12-1 - 12-9) gegenüber einer äquidistanten Verteilung entlang der Geraden (18) relativ zu der Geraden (18) variieren.

2. Multiaperturvorrichtung (10; 10'; 20; 20'; 30; 30') gemäß Anspruch 1, wobei die zumindest zwei optischen Kanälen (12-1 - 12-9) zur Erfassung des ersten Teilbereichs (15-1 - 15-9) des Objektbereichs (17) und die zumindest zwei optischen Kanälen (12-1 - 12-9) zur Erfassung des zweiten Teilbereichs (15-1 - 15-9) des Objektbereichs (17) einen von einander verschiedenen Blickwinkel aufweisen und ausgebildet sind, um einen von einander verschiedenen Teilbereich (15-1 - 15-9) des Objektbereichs (17) zu erfassen.

3. Multiaperturvorrichtung (10; 10'; 20; 20'; 30; 30') gemäß Anspruch 1 oder 2, wobei die Multiaperturvorrichtung einzeilig aufgebaut ist, so dass die Anordnung der optischen Kanäle zur Erfassung des ersten Teilbereichs und die Anordnung der optischen Kanäle zur Erfassung des zweiten Teilbereichs einzeilig ist und als eine Form 1xN beschrieben werden kann.

4. Multiaperturvorrichtung gemäß einem der vorangehenden Ansprüche, bei der die zumindest zwei optischen Kanäle (12-1 - 12-9) zur Erfassung des ersten Teilbereichs (15-1 - 15-9) des Objektbereichs (17) und die zumindest zwei optischen Kanäle (12-1 - 12-9) zur Erfassung des zweiten Teilbereichs (15-1 - 15-9) des Objektbereichs (17) jeweils Pixelgitter mit einer Anzahl von Pixel umfassen.

5. Multiaperturvorrichtung (10; 10'; 20; 20'; 30; 30') gemäß einem der vorangehenden Ansprüche, wobei in den optischen Kanälen (12-7a; 12-7b; 12-7c; 12-7d) zur Erfassung des ersten Teilbereichs (15-7) die Mittelpunkte von Pixelarrays von Bildsensorbereichen (14-7) der jeweiligen optischen Kanäle (12-7a; 12-7b; 12-7c; 12-7d) bzgl. der Mittelpunkte der zugehörigen Abbildungsoptik des jeweiligen optischen Kanals um den Bruchteil eines Pixelpitches lateral zueinander verschoben sind, so dass der erste Teilbereich durch zumindest zwei der optischen Kanäle (12-7a; 12-7b; 12-7c; 12-7d) um einen Subpixelversatz lateral gegeneinander verschoben abgetastet wird.

6. Multiaperturvorrichtung gemäß einem der vorangehenden Ansprüche, bei der eine Anzahl an optischen Kanälen (12-1 - 12-9) des ersten und des zweiten Teilbereichs identisch ist.

7. Multiaperturvorrichtung (10; 10'; 20; 20'; 30; 30') gemäß einem der vorangegangenen Ansprüche, bei der zumindest einer der optischen Kanäle ein optisches Transmissionsfilter umfasst, so dass dem zumindest einen optischen Kanal eine Spektralfarbe zugeordnet ist.

8. Multiaperturvorrichtung (10; 10'; 20; 20'; 30; 30') gemäß einem der vorangegangenen Ansprüche, bei der die einzeilige Struktur zumindest zwei im Wesentlichen geradlinige Abschnitte (16a-d; 16'a-d; 24a-d; 24'a-d; 26a-d; 26'a-d) umfasst, die winklig zueinander angeordnet sind.

9. Multiaperturvorrichtung (10; 10'; 20; 20'; 30; 30') gemäß Anspruch 8, bei der die zumindest zwei Abschnitte (16a-d; 16'a-d; 24a-d; 24'a-d; 26a-d; 26'a-d) eine identische Anzahl an optischen Kanälen (12-1 - 12-9) umfassen.

10. Multiaperturvorrichtung (10; 10'; 20; 20'; 30; 30') gemäß Anspruch 8 oder 9, bei der die zumindest zwei Abschnitte (16a-d; 16'a-d; 24a-d; 24'a-d; 26a-d; 26'a-d) so angeordnet sind, dass sie an einander anschließen

11. Multiaperturvorrichtung (10; 10'; 20; 20'; 30; 30') gemäß einem der vorangegangenen Ansprüche, die zumindest zwei optische Kanäle (12-1 - 12-9) zur Erfassung eines dritten Teilbereichs des Objektbereichs umfasst, wobei sich der dritte optische Teilbereich mit dem ersten oder dem zweiten optischen Teilbereich zumindest teilweise überlappt, wobei die optischen Kanäle (12-1 - 12-9) derart verschränkt angeordnet sind, dass optische Kanäle (12-1 - 12-9) zur Erfassung eines der Teilbereiche auf einem Bildwandler einen maximalen Abstand zueinander aufweisen.

12. Multiaperturvorrichtung (10; 10'; 20; 20'; 30; 30') gemäß einem der vorangegangenen Ansprüche, die zumindest zwei optische Kanäle (12-1 - 12-9) zur Erfassung eines dritten Teilbereichs des Objektbereichs umfasst, der sich mit dem ersten oder dem zweiten Teilbereich zumindest teilweise überlappt und wobei die optischen Kanäle (12-1 - 12-9) so auf einem Bildwandler angeordnet sind, dass eine Anordnung der optischen Kanäle auf einem Bildwandler einer Anordnung mit einem maximalen Winkelabstand der Teilbereiche entspricht.

13. Multiaperturvorrichtung (10; 10'; 20; 20'; 30; 30') gemäß einem der vorangegangenen Ansprüche, die zumindest zwei optische Kanäle (12-1 - 12-9) zur Erfassung eines dritten Teilbereichs des Objektbereichs umfasst, der sich mit dem ersten oder dem zweiten Teilbereich zumindest teilweise überlappt und wobei die optischen Kanäle (12-1 - 12-9) so auf einem Bildwandler angeordnet sind, dass
eine Anordnung der optischen Kanäle (12-1 - 12-9) auf einem Bildwandler einer gleichmäßigen Anordnung bezüglich zweier lateraler Richtungen der Teilbereiche entspricht; oder
dass eine Anordnung der optischen Kanäle (12-1 - 12-9) auf einem Bildwandler eine maximale Totzone zwischen den Teilbereichen entspricht.

14. System mit einer Multiaperturvorrichtung (10; 10'; 20; 20'; 30; 30') gemäß einem der Ansprüche 1-13, das System ein Mobiltelefon ist.

15. Verfahren zur Erfassung eines Objektbereichs mit folgenden Merkmalen:
Anordnen zumindest zweier optischer Kanäle zur Erfassung eines ersten Teilbereichs des Objektbereichs auf einem Bildwandler; und
Anordnen zumindest zweier optischer Kanäle zur Erfassung eines zweiten Teilbereichs des Objektbereichs auf dem Bildwandler; wobei
die optischen Kanäle zur Erfassung des ersten und des zweiten Teilbereichs in einer einzeiligen Struktur verschränkt angeordnet sind; und wobei
sich der erste und der zweite Teilbereich teilweise überlappen und in dem Objektbereich von einander verschieden sind;
wobei das Anordnen der optischen Kanäle so erfolgt, dass jeder optische Kanal (12-1 - 12-9) einen Bildsensorbereich (14-1 - 14-9) aufweist, dessen Position auf einem Bildwandler von einer Position des zu erfassenden Teilbereichs innerhalb des Objektbereichs abhängig ist und so dass optische Zentren von Optiken der optischen Kanäle (12-1 - 12-9) auf einer Geraden (18) entlang einzelner optischer Kanäle (12-1 - 12-9) liegen und Mitten der Bildsensorbereiche (14-1 - 14-9) der optischen Kanäle (12-1 - 12-9) gegenüber einer äquidistanten Verteilung entlang der Geraden (18) relativ zu der Linie (18) variieren; oder
wobei das Anordnen der optischen Kanäle so erfolgt, dass jeder optische Kanal (12-1 - 12-9) einen Bildsensorbereich (14-1 - 14-9) aufweist, dessen Position auf einem Bildwandler von einer Position des zu erfassenden Teilbereichs innerhalb des Objektbereichs abhängig ist und so dass Mitten der Bildsensorbereiche (14-1 - 14-9) der optischen Kanäle (12-1 - 12-9) auf einer Geraden (18) entlang einzelner optischer Kanäle (12-1 - 12-9) liegen und optische Zentren von Optiken der optischen Kanäle (12-1 - 12-9) gegenüber einer äquidistanten Verteilung entlang der Geraden (18) relativ zu der Linie variieren.

## Claims

1. Multi-aperture device (10; 10'; 20; 20'; 30; 30') for capturing an object region (17), comprising:
at least two optical paths (12-1 - 12-9) for capturing a first partial region (15-1 - 15-9) of the object region (17); and
at least two optical paths (12-1 - 12-9) for capturing a second partial region (15-1 - 15-9) of the object region (17); wherein
the optical paths (12-1 - 12-9) for capturing the first partial region (15-1 - 15-9) and the second partial region (15-1 - 15-9) are arranged in an interlaced manner in a single-line structure; and wherein
the first partial region (15-1 - 15-9) and the second partial region (15-1 - 15-9) partially overlap and differ from each other in the object region;
wherein each optical path (12-1 - 12-9) comprises an image sensor region (14-1 - 14-9) whose position on an image converter depends on a position of the partial region to be captured within the object region, and wherein optical centers of optics of the optical paths (12-1 - 12-9) are on a straight line (18) along individual optical paths (12-1 - 12-9) and middles of the image sensor regions (14-1 - 14-9) of the optical paths (12-1 - 12-9) vary from an equidistant distribution along the straight line (18) relative to the straight line (18); or
wherein each optical path (12-1 - 12-9) comprises an image sensor region (14-1 - 14-9) whose position on an image converter depends on a position of the partial region to be captured within the object region, and wherein middles of the image sensor regions (14-1 - 14-9) of the optical paths (12-1 - 12-9) are on a straight line (18) along individual optical paths (12-1 - 12-9) and optical centers of optics of the optical paths (12-1 - 12-9) vary from an equidistant distribution along the straight line (18) relative to the straight line (18).

2. Multi-aperture device (10; 10'; 20; 20'; 30; 30') according to claim 1, wherein the at least two optical paths (12-1 - 12-9) for capturing the first partial region (15-1 - 15-9) of the object region (17) and the at least two optical paths (12-1 - 12-9) for capturing the second partial region (15-1 - 15-9) of the object region (17) comprise a different angle of view and are configured to capture a different partial region (15-1 - 15-9) of the object region (17).

3. Multi-aperture device (10; 10'; 20; 20'; 30; 30') according to claim 1 or 2, wherein the multi-aperture device is structured in a single-line manner so that the arrangement of the optical paths for capturing the first partial region and the arrangement of the optical paths for capturing the second partial region is single-lined and may be described in the form of 1xN.

4. Multi-aperture device according to any one of the preceding claims, wherein the at least two optical paths (12-1 - 12-9) for capturing the first partial region (15-1 - 15-9) of the object region (17) and the at least two optical paths (12-1 - 12-9) for capturing the second partial region (15-1 - 15-9) of the object region (17) include pixel grids having a number of pixels.

5. Multi-aperture device (10; 10'; 20; 20'; 30; 30') according to any one of the preceding claims, wherein in the optical paths (12-7a; 12-7b; 12-7c; 12-7d) for capturing the first partial region (15-7), the midpoints of pixel arrays of image sensor regions (14-7) of the respective optical paths (12-7a; 12-7b; 12-7c; 12-7d) are laterally shifted by the fraction of a pixel pitch with respect to the midpoints of the associated imaging optics of the respective optical path so that the first partial region is scanned by means of the at least two optical paths (12-7a; 12-7b; 12-7c; 12-7d) that are laterally shifted by one sub-pixel offset.

6. Multi-aperture device according to any one of the preceding claims, wherein a number of optical paths (12-1 - 12-9) of the first and the second partial region is identical.

7. Multi-aperture device (10; 10'; 20; 20'; 30; 30') according to any one of the preceding claims, wherein at least one of the optical paths includes an optical transmission filter so that a spectral color is assigned to the at least one optical path.

8. Multi-aperture device (10; 10'; 20; 20'; 30; 30') according to any one of the preceding claims, wherein the single-line structure includes at least two essentially straight portions (16a-d; 16'a-d; 24a-d; 24'a-d; 26a-d; 26'a-d) that are arranged at an angle to each other.

9. Multi-aperture device (10; 10'; 20; 20'; 30; 30') according to claim 8, wherein the at least two portions (16a-d; 16'a-d; 24a-d; 24'a-d; 26a-d; 26'a-d) include an identical number of optical paths (12-1 - 12-9).

10. Multi-aperture device (10; 10'; 20; 20'; 30; 30') according to claim 8 or 9, wherein the at least two portions (16a-d; 16'a-d; 24a-d; 24'a-d; 26a-d; 26'a-d) are arranged such that they are connected to one another.

11. Multi-aperture device (10; 10'; 20; 20'; 30; 30') according to any one of the preceding claims, comprising at least two optical paths (12-1 - 12-9) for capturing a third partial region of the object region, wherein the third optical partial region at least partially overlaps with the first or the second optical partial region, wherein the optical paths (12-1 - 12-9) are arranged in an interlaced manner such that the optical paths (12-1 - 12-9) for capturing one of the partial regions comprise a maximum distance to each other on an image converter.

12. Multi-aperture device (10; 10'; 20; 20'; 30; 30') according to any one of the preceding claims, comprising at least two optical paths (12-1 - 12-9) for capturing a third partial region of the object region, wherein the third partial region at least partially overlaps with the first or the second partial regions and wherein the optical paths (12-1 - 12-9) are arranged on an image converter such that an arrangement of the optical paths on an image converter corresponds to an arrangement with a maximum angular distance of the partial regions.

13. Multi-aperture device (10; 10'; 20; 20'; 30; 30') according to any one of the preceding claims, including at least two optical paths (12-1 - 12-9) for capturing a third partial region of the object region, wherein the third partial region at least partially overlaps with the first or the second partial region and wherein the optical paths (12-1 - 12-9) are arranged on an image converter such that
an arrangement of the optical paths (12-1 - 12-9) on an image converter corresponds to a uniform arrangement with respect to two lateral directions of the partial regions; or
an arrangement of the optical paths (12-1 - 12-9) on an image converter corresponds to a maximum dead zone between the partial regions.

14. System having a multi-aperture device (10; 10'; 20; 20'; 30; 30') according to any one of claims 1-13, wherein the system is a mobile telephone.

15. Method for capturing an object region, comprising:
arranging at least two optical paths for capturing a first partial region of the object region on an image converter; and
arranging at least two optical paths for capturing a second partial region of the object region on the image converter; wherein
the optical paths for capturing the first partial region and the second partial region are arranged in an interlaced manner in a single-line structure; and wherein
the first partial region and the second partial region partially overlap and differ from each other in the object region;
wherein arranging the optical paths is carried out such that each optical path (12-1 - 12-9) comprises an image sensor region (14-1 - 14-9) whose position on an image converter depends on a position of the partial region to be captured within the object region, and wherein optical centers of optics of the optical paths (12-1 - 12-9) are on a straight line (18) along individual optical paths (12-1 - 12-9) and middles of the image sensor regions (14-1 - 14-9) of the optical paths (12-1 - 12-9) vary from an equidistant distribution along the straight line (18) relative to the line (18); or
wherein arranging the optical paths is carried out such each optical path (12-1 - 12-9) comprises an image sensor region (14-1 - 14-9) whose position on an image converter depends on a position of the partial region to be captured within the object region, and such that middles of the image sensor regions (14-1 - 14-9) of the optical paths (12-1 - 12-9) are on a straight line (18) along individual optical paths (12-1 - 12-9) and optical centers of optics of the optical paths (12-1 - 12-9) vary from an equidistant distribution along the straight line (18) relative to the line.

## Revendications

1. Dispositif multi-ouverture (10; 10'; 20; 20'; 30; 30') pour la capture d'une zone d'objet (17), aux caractéristiques suivantes:
au moins deux canaux optiques (12-1 à 12-9) pour la capture d'une première zone partielle (15-1 à 15-9) de la zone d'objet (17); et
au moins deux canaux optiques (12-1 à 12-9) pour la capture d'une deuxième zone partielle (15-1 à 15-9) de la zone d'objet (17);
dans lequel les canaux optiques (12-1 à 12-9) pour la capture de la première zone partielle (15-1 à 15-9) et de la deuxième zone partielle (15-1 à 15-9) sont disposés entrelacés dans une structure d'une seule rangée; et
dans lequel la première zone partielle (15-1 à 15-9) et la deuxième zone partielle (15-1 à 15-9) se chevauchent partiellement et sont différentes l'une de l'autre dans la zone d'objet;
dans lequel chaque canal optique (12-1 à 12-9) présente une zone de capteur d'image (14-1 à 14-9) dont la position sur un convertisseur d'image dépend d'une position de la zone partielle à capter dans la zone d'objet, et dans lequel les centres optiques des optiques des canaux optiques (12-1 à 12-9) se situent sur une ligne droite (18) le long de canaux optiques individuels (12-1 à 12-9) et les centres des zones de capteur d'image (14-1 à 14-9) des canaux optiques (12-1 à 12-9) varient par rapport à une distribution équidistante le long de la ligne droite (18) par rapport à la ligne droite (18); ou
dans lequel chaque canal optique (12-1 à 12-9) présente une zone de capteur d'image (14-1 à 14-9) dont la position sur un convertisseur d'image dépend d'une position de la zone partielle à capter dans la zone d'objet, et dans lequel les centres des zones de capteur d'image (14-1 à 14-9) des canaux optiques (12-1 à 12-9) se situent sur une ligne droite (18) le long de canaux optiques individuels (12-1 à 12-9) et les centres optiques des optiques des canaux optiques (12-1 à 12-9) varient par rapport à une distribution équidistante le long de la ligne droite (18) par rapport à la droite (18).

2. Dispositif multi-ouverture (10; 10'; 20; 20'; 30; 30') selon la revendication 1, dans lequel les au moins deux canaux optiques (12-1 à 12-9) pour la capture de la première zone partielle (15-1 à 15-9) de la zone d'objet (17) et les au moins deux canaux optiques (12-1 à 12-9) pour la capture de la deuxième zone partielle (15-1 à 15-9) de la zone d'objet (17) présentent un angle de vue différent entre eux et sont conçus pour capter une zone partielle (15-1 à 15-9) différente l'une de l'autre de la zone d'objet (17).

3. Dispositif multi-ouverture (10; 10'; 20; 20'; 30; 30') selon la revendication 1 ou 2, dans lequel le dispositif multi-ouverture est construit en une seule rangée, de sorte que la disposition des canaux optiques pour capter la première zone partielle et la disposition des canaux optiques pour capter la deuxième zone partielle sont d'une seule rangée et peuvent être décrites comme étant une forme 1xN.

4. Dispositif multi-ouverture selon l'une des revendications précédentes, dans lequel les au moins deux canaux optiques (12-1 à 12-9) pour la capture de la première zone partielle (15-1 à 15-9) de la zone d'objet (17) et les au moins deux canaux optiques (12-1 à 12-9) pour la capture de la deuxième zone partielle (15-1 à 15-9) de la zone d'objet (17) comportent, chacun, des grilles de pixels avec un nombre de pixels.

5. Dispositif multi-ouverture (10; 10'; 20; 20'; 30; 30') selon l'une des revendications précédentes, dans lequel, dans les canaux optiques (12-7a; 12-7b; 12-7c; 12-7d) pour la capture de la première zone partielle (15-7), les centres des rangées de pixels des zones de capteur d'image (14-7) des canaux optiques respectifs (12-7a; 12-7b; 12-7c; 12-7d) sont, par rapport aux centres de l'optique de reproduction correspondante du canal optique respectif, décalés latéralement l'un de l'autre de la fraction d'un pas de pixels, de sorte que la première zone partielle soit balayée par au moins deux des canaux optiques (12-7a; 12-7b; 12-7c; 12-7d) de manière décalée latéralement l'un de l'autre d'un décalage de sous-pixels.

6. Dispositif multi-ouverture selon l'une des revendications précédentes, dans lequel l'un nombre de canaux optiques (12-1 à 12-9) de la première et de la deuxième zone partielle est identique.

7. Dispositif multi-ouverture (10; 10'; 20; 20'; 30; 30') selon l'une des revendications précédentes, dans lequel au moins l'un des canaux optiques comporte un filtre de transmission optique, de sorte qu'à l'au moins un canal optique soit associée une couleur spectrale.

8. Dispositif multi-ouverture (10; 10'; 20; 20'; 30; 30') selon l'une des revendications précédentes, dans lequel la structure en une seule rangée comporte au moins deux segments sensiblement rectilignes (16a à d; 16'a à d; 24a à d; 24;'a à d; 26a à d; 26'a à d) disposés selon un angle l'un par rapport à l'autre.

9. Dispositif multi-ouverture (10; 10'; 20; 20'; 30; 30') selon la revendication 8, dans lequel les au moins deux segments (16a à d; 16'a à d; 24a à d; 24'a à d; 26a à d; 26'a à d) comportent un nombre identique de canaux optiques (12-1 à 12-9).

10. Dispositif multi-ouverture (10; 10'; 20; 20'; 30; 30') selon la revendication 8 ou 9, dans lequel les au moins deux segments (16a à d; 16'a à d; 24a à d; 24'a à d; 26a à d; 26'a à d) sont disposés de sorte qu'ils se raccordent l'un à l'autre.

11. Dispositif multi-ouverture (10; 10'; 20; 20'; 30; 30') selon l'une des revendications précédentes, comportant au moins deux canaux optiques (12-1 à 12-9) pour la capture d'une troisième zone partielle de la zone d'objet, où la troisième zone optique partielle vient au moins partiellement en chevauchement avec la première ou la deuxième zone optique partielle, dans lequel les canaux optiques (12-1 à 12-9) sont disposés entrelacés de sorte que les canaux optiques (12-1 à 12-9) pour la capture de l'une des zones partielles sur un convertisseur d'image présentent une distance maximale entre eux.

12. Dispositif multi-ouverture (10; 10'; 20; 20'; 30; 30') selon l'une des revendications précédentes, comportant au moins deux canaux optiques (12-1 à 12-9) pour la capture d'une troisième zone partielle de la zone d'objet qui vient au moins partiellement en chevauchement avec la première ou la deuxième zone partielle et dans lequel les canaux optiques (12-1 à 12-9) sont disposés sur un convertisseur d'image de sorte qu'une disposition des canaux optiques sur un convertisseur d'image corresponde à une disposition à distance angulaire maximale des zones partielles.

13. Dispositif multi-ouverture (10; 10'; 20; 20'; 30; 30') selon l'une des revendications précédentes, comportant au moins deux canaux optiques (12-1 à 12-9) pour la capture d'une troisième zone partielle de la zone d'objet qui vient au moins partiellement en chevauchement avec la première ou la deuxième zone partielle et dans lequel les canaux optiques (12-1 à 12-9) sont disposés sur un convertisseur d'image de sorte que
une disposition des canaux optiques (12-1 à 12-9) sur un convertisseur d'image corresponde à une disposition uniforme par rapport à deux directions latérales des zones partielles; ou
une disposition des canaux optiques (12-1 à 12-9) sur un convertisseur d'image corresponde à une zone morte maximale entre les zones partielles.

14. Système avec un dispositif multi-ouverture (10; 10'; 20; 20'; 30; 30') selon l'une des revendications 1 à 13, dans lequel le système est un téléphone mobile.

15. Procédé de capture d'une zone d'objet aux caractéristiques suivantes consistant à:
disposer au moins deux canaux optiques pour la capture d'une première zone partielle de la zone d'objet sur un convertisseur d'image; et
disposer au moins deux canaux optiques pour la capture d'une deuxième zone partielle de la zone d'objet sur le convertisseur d'image;
dans lequel les canaux optiques pour la capture de la première et de la deuxième zone partielle sont disposés de manière entrelacée dans une structure en une seule rangée; et
dans lequel la première et la deuxième zone partielle se chevauchent partiellement et sont différentes l'une de l'autre dans la zone d'objet;
dans lequel la disposition des canaux optiques a lieu de sorte que chaque canal optique (12-1 à 12-9) présente une zone de capteur d'image (14-1 à 14-9) dont la position sur un convertisseur d'image dépend d'une position de la zone partielle à capter dans la zone d'objet et de sorte que les centres optiques des optiques des canaux optiques (12-1 à 12-9) se situent sur une ligne droite (18) le long de canaux optiques individuels (12-1 à 12-9) et que les centres des zones de capteur d'image (14-1 à 14-9) des canaux optiques (12-1 à 12-9) varient par rapport à une distribution équidistante le long de la ligne droite (18) par rapport à la ligne droite (18); ou
dans lequel la disposition des canaux optiques a lieu de sorte que chaque canal optique (12-1 à 12-9) présente une zone de capteur d'image (14-1 à 14-9) dont la position sur un convertisseur d'image dépend d'une position de la zone partielle à capter dans la zone d'objet et de sorte que les centres des zones de capteur d'image (14-1 à 14-9) des canaux optiques (12-1 à 12-9) se situent sur une ligne droite (18) le long de canaux optiques individuels (12-1 à 12-9) et que les centres optiques des optiques des canaux optiques (12-1 à 12-9) varient par rapport à une distribution équidistante le long de la ligne droite (18) par rapport à la ligne droite.
